(19) Europäisches Patentamt
European Patent Office
Office européen des brevets

(11) **EP 4 518 267 A1**

(12) **EUROPEAN PATENT APPLICATION**
published in accordance with Art. 153(4) EPC

(43) Date of publication:
**05.03.2025 Bulletin 2025/10**

(21) Application number: **23802616.5**

(22) Date of filing: **21.04.2023**

(51) International Patent Classification (IPC):
**H04L 27/26** (2006.01)

(52) Cooperative Patent Classification (CPC):
**H04L 27/26; H04W 28/26; H04W 72/0453**

(86) International application number:
**PCT/CN2023/089747**

(87) International publication number:
**WO 2023/216842 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.05.2022 CN 202210521711**

(71) Applicant: **Huawei Technologies Co., Ltd.
Shenzhen, Guangdong 518129 (CN)**

(72) Inventors:
• **WANG, Xiaolu
Shenzhen, Guangdong 518129 (CN)**
• **LI, Rong
Shenzhen, Guangdong 518129 (CN)**
• **LUO, Hejia
Shenzhen, Guangdong 518129 (CN)**
• **QIAO, Yunfei
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) This application provides a communication method and a communication apparatus. The method includes: A reserved tone pattern (namely, a second reserved tone pattern) corresponding to a to-be-extended bandwidth (a first bandwidth) may be determined based on a basic reserved tone pattern and a corresponding bandwidth (a second bandwidth). Specifically, reserved tone patterns applicable to larger bandwidths or different IFFT lengths may be determined by copying and translating the basic reserved tone pattern. Further, signal PAPR suppression can be performed by using a reserved sub-carrier, and signaling storage overheads of a system and implementation complexity can be reduced.

Method 700

S710

Determine a first bandwidth

S720

Determine a second reserved tone pattern based on the first bandwidth and a first reserved tone pattern, where the second reserved tone pattern includes $x$ translated first reserved tone patterns

S730

Receive or send data based on the second reserved tone pattern

FIG. 7

**Description**

This application claims priority to Chinese Patent Application No. 202210521711.8, filed with the China National Intellectual Property Administration on May 13, 2022 and entitled "COMMUNICATION METHOD AND COMMUNICATION APPARATUS", which is incorporated herein by reference in its entirety.

**TECHNICAL FIELD**

This application relates to the wireless communication field, and more specifically, to a communication method and a communication apparatus.

**BACKGROUND**

With continuous development of 5th generation (5th generation, 5G) communication technologies, non-terrestrial network (Non-Terrestrial Network, NTN) communication can implement seamless coverage of a global network, and has characteristics such as a large coverage region and flexible networking.

In a satellite communication system, a satellite device is an energy-limited and power-limited device. In terrestrial cellular network communication or NTN communication, it is required that a high power amplifier (High Power Amplifier, HPA) at a transmitting end operate near a linear saturation region, to improve power efficiency of the satellite device as much as possible. However, when the HPA operates near a saturation point, there is a specific probability that a signal input to the HPA enters a non-linear region and generates non-linear distortion. For example, when a system performs data transmission through an orthogonal frequency division multiplexing (Orthogonal Frequency Division Multiplexing, OFDM) waveform with a high peak-to-average power ratio (Peak-to-Average Power Ratio, PAPR), the high PAPR imposes high requirements on linear ranges of power amplifiers in a transmitter machine and a receiver machine. If the linear ranges of the amplifiers cannot meet a dynamic change range of a signal, the signal may be nonlinearly distorted. As a result, spectrum leakage is caused, orthogonality between sub-carriers is damaged, inter-carrier interference is generated, and system performance is reduced.

Therefore, how to avoid non-linear distortion generated by a signal input to an HPA in a communication system is an urgent problem to be resolved.

**SUMMARY**

This application provides a communication method and a communication apparatus, to generate, by reserving sub-carriers, tones applicable to different bandwidths or different IFFT lengths. Therefore, signal PAPR suppression can be performed by using the reserved sub-carrier, and signaling storage overheads of a system and implementation complexity can be reduced.

According to a first aspect, a communication method is provided. The method may be performed by a network device, or may be performed by a terminal device, or may be performed by a chip or a circuit configured in the network device or a chip or a circuit configured in the terminal device, or may be performed by a logical module or software that can implement all or some functions of the network device or all or some functions of the terminal device. This is not limited in this application.

The method includes: determining a first bandwidth $BW1$; determining a second reserved tone pattern based on the first bandwidth $BW1$ and a first reserved tone pattern, where the second reserved tone pattern is a tone index set corresponding to second reserved tones, the first reserved tone pattern is a tone index set corresponding to first reserved tones, the second reserved tone pattern includes $X$ translated first reserved tone patterns, a bandwidth corresponding to the first reserved tone pattern is a second bandwidth $BW2$, $x = \text{int}(BW1 / BW2)$, and int represents rounding; and receiving or sending data based on the second reserved tone pattern.

According to this solution in embodiments of this application, a reserved tone pattern (namely, the second reserved tone pattern) corresponding to a to-be-extended bandwidth (the first bandwidth) may be determined based on a basic reserved tone pattern and a corresponding bandwidth (the second bandwidth). To be specific, reserved tone patterns applicable to larger bandwidths or different IFFT lengths may be determined. Therefore, signal PAPR suppression can be performed by using a reserved sub-carrier, and signaling storage overheads of a system and implementation complexity can be reduced.

In this application, the first bandwidth is for data transmission between the network device and the terminal device.

With reference to the first aspect, in some implementations of the first aspect, when the method is applied to a first communication apparatus, the method further includes: receiving $X$ offset values.

In this application, the first communication apparatus is the terminal device.

With reference to the first aspect, in some implementations of the first aspect, when the method is applied to the second communication apparatus, the method further includes: sending $X$ offset values.

In this application, the second communication apparatus is the network device.

With reference to the first aspect, in some implementations of the first aspect, the $X$ offset values are an integer multiple of a reciprocal of reference signal density of the first bandwidth $BW1$.

With reference to the first aspect, in some implementations of the first aspect, the network device or the terminal device determines the $X$ offset values based on the first bandwidth $BW1$.

With reference to the first aspect, in some implementations of the first aspect, the network device or the terminal device determines the $X$ offset values based on a quantity of RBs corresponding to the first bandwidth $BW1$.

With reference to the first aspect, in some implementations of the first aspect, the network device or the terminal device determines the $X$ offset values based on an IFFT length.

With reference to the first aspect, in some implementations of the first aspect, int represents rounding up or rounding down.

With reference to the first aspect, in some implementations of the first aspect, the first reserved tone pattern is determined based on the second bandwidth $BW2$ or a quantity of RBs occupied by the second bandwidth $BW2$.

According to a second aspect, a communication method is provided. The method may be performed by a terminal device, or may be performed by a chip or a circuit configured in the terminal device, or may be performed by a logical module or software that can implement all or some functions of the terminal device. This is not limited in this application.

The method includes: receiving $X$ offset values; determining a second reserved tone pattern based on the $X$ offset values and a first reserved tone pattern, where the second reserved tone pattern is a tone index set corresponding to second reserved tones, the second reserved tone pattern includes $X$ translated first reserved tone patterns, and $X$ is a positive integer; and receiving or sending data based on the second reserved tone pattern.

According to this solution in embodiments of this application, a network device sends offset values to the terminal device, so that the network device and the terminal device perform replication and offset on a current bandwidth to obtain a new reserved tone pattern, and perform data transmission based on the new reserved tone pattern. This solution is used to improve a signal PAPR suppression capability and improve communication performance in a larger bandwidth or the current bandwidth.

With reference to the first aspect and the second aspect, in some implementations of the first aspect and the second aspect, the method includes: receiving the first reserved tone pattern.

According to a third aspect, a communication method is provided. The method may be performed by a network device, or may be performed by a chip or a circuit configured in the network device, or may be performed by a logical module or software that can implement all or some functions of the network device. This is not limited in this application.

The method includes: sending $X$ offset values; determining a second reserved tone pattern based on the $X$ offset values and a first reserved tone pattern, where the second reserved tone pattern is a tone index set corresponding to second reserved tones, the second reserved tone pattern includes $X$ translated first reserved tone patterns, and $X$ is a positive integer; and receiving or sending data based on the second reserved tone pattern.

According to this solution in embodiments of this application, the network device sends offset values to a terminal device, so that the network device and the terminal device perform replication and offset on a current bandwidth to obtain a new reserved tone pattern, and perform data transmission based on the new reserved tone pattern. This solution is used to improve a signal PAPR suppression capability and improve communication performance in a larger bandwidth of the current bandwidth.

With reference to the first aspect and the third aspect, in some implementations of the first aspect and the third aspect, the method includes: sending the first reserved tone pattern.

According to a fourth aspect, a communication apparatus is provided. The apparatus may be a network device, or may be a terminal device, or may be a chip or a circuit configured in the network device or a chip or a circuit configured in the terminal device, or may be a logical module or software that can implement all or some functions of the network device or all or some functions of the terminal device. This is not limited in this application.

The apparatus includes: a processing unit, configured to determine a first bandwidth $BW1$, where the processing unit is further configured to determine a second reserved tone pattern based on the first bandwidth $BW1$ and a first reserved tone pattern, where the second reserved tone pattern is a tone index set corresponding to second reserved tones, the first reserved tone pattern is a tone index set corresponding to first reserved tones, the second reserved tone pattern includes $X$ translated first reserved tone patterns, a bandwidth corresponding to the first reserved tone pattern is a second bandwidth $BW2$, $x = int(BW1 / BW2)$, and int represents rounding; and a transceiver unit, configured to receive or send data based on the second reserved tone pattern.

With reference to the fourth aspect, in some implementations of the fourth aspect, when the apparatus is the terminal device, the transceiver unit is further configured to: receive $X$ offset values.

With reference to the fourth aspect, in some implementations of the fourth aspect, when the apparatus is the network device, the transceiver unit is further configured to: send $X$ offset values.

With reference to the fourth aspect, in some implementations of the fourth aspect, the $X$ offset values are an integer multiple of a reciprocal of reference signal density of the first bandwidth $BW1$.

With reference to the fourth aspect, in some implementations of the fourth aspect, the processing unit is further configured to: determine the $X$ offset values based on the first bandwidth $BW1$.

With reference to the fourth aspect, in some implementations of the fourth aspect, the processing unit is specifically configured to: determine the $X$ offset values based on a quantity of RBs corresponding to the first bandwidth $BW1$.

With reference to the fourth aspect, in some implementations of the fourth aspect, the processing unit is specifically configured to: determine the $X$ offset values based on an IFFT length.

With reference to the fourth aspect, in some implementations of the fourth aspect, int represents rounding up or rounding down.

With reference to the fourth aspect, in some implementations of the fourth aspect, the processing unit is further configured to: determine the first reserved tone pattern based on the second bandwidth $BW2$ or a quantity of RBs occupied by the second bandwidth $BW2$.

According to a fifth aspect, a communication apparatus is provided. The apparatus may be a terminal device, or may be a chip or a circuit configured in the terminal device, or may be a logical module or software that can implement all or some functions of the terminal device. This is not limited in this application.

The apparatus includes: a transceiver unit, configured to receive $X$ offset values; and a processing unit, configured to determine a second reserved tone pattern based on the $X$ offset values and a first reserved tone pattern, where the second reserved tone pattern is a tone index set corresponding to second reserved tones, the second reserved tone pattern includes $X$ translated first reserved tone patterns, and $X$ is a positive integer; and the transceiver unit is further configured to receive or send data based on the second reserved tone pattern.

With reference to the fourth aspect and the fifth aspect, in some implementations of the fourth aspect and the fifth aspect, the transceiver unit is further configured to: receive the first reserved tone pattern.

According to a sixth aspect, a communication apparatus is provided. The apparatus may be a network device, or may be a chip or a circuit configured in the network device, or may be a logical module or software that can implement all or some functions of the network device. This is not limited in this application.

The apparatus includes: a transceiver unit, configured to send $X$ offset values; and a processing unit, configured to determine a second reserved tone pattern based on the $X$ offset values and a first reserved tone pattern, where the second reserved tone pattern is a tone index set corresponding to second reserved tones, the second reserved tone pattern includes $X$ translated first reserved tone patterns, and $X$ is a positive integer; and the transceiver unit is further configured to receive or send data based on the second reserved tone pattern.

With reference to the fourth aspect and the sixth aspect, in some implementations of the fourth aspect and the sixth aspect, the transceiver unit is further configured to: send the first reserved tone pattern.

According to a seventh aspect, this application provides a communication apparatus. The apparatus includes at least one processor, the at least one processor is coupled to at least one memory, and the at least one processor is configured to execute a computer program or instructions stored in the at least one memory, so that the apparatus performs the methods according to any possible implementations of the first aspect to the third aspect.

According to an eighth aspect, this application provides a computer-readable medium. The computer-readable storage medium stores a computer program or instructions, and when the computer program or the instructions are run on a computer, the computer is enabled to implement the methods according to any possible implementations of the first aspect to the third aspect.

According to a ninth aspect, this application provides a computer program product, including a computer program or instructions. When the computer program or the instructions are executed, the methods according to any possible implementations of the first aspect to the third aspect are implemented.

According to a tenth aspect, this application provides a chip system, including a processor. The processor is configured to execute a computer program or instructions in a memory, so that the chip system implements the methods according to any possible implementations of the first aspect to the third aspect.

According to an eleventh aspect, a communication apparatus is provided. The apparatus includes a processor, and the processor is configured to perform the methods according to any possible implementations of the first aspect to the third aspect.

According to a twelfth aspect, this application provides a chip system. The chip system includes a processor, configured to support a terminal device in implementing functions in the foregoing aspects, for example, receiving or processing data and/or information in the foregoing methods. In a possible design, the chip system further includes a memory. The memory is configured to store program instructions and data that are necessary for the terminal device. The chip system may include a chip, or may include a chip and another discrete component.

According to a twelfth aspect, this application provides a chip system. The chip system includes a processor, configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete component.

For beneficial effect in the fourth aspect to the twelfth aspect and the possible implementations of any one of the fourth aspect to the twelfth aspect, refer to beneficial effect in the first aspect and the possible implementations of the first aspect.

## BRIEF DESCRIPTION OF DRAWINGS

FIG. 1 is a diagram of a network architecture to which a method to which an embodiment of this application is applicable;

FIG. 2 is another diagram of a network architecture to which a method to which an embodiment of this application is applicable;

FIG. 3 is another diagram of a network architecture to which a method to which an embodiment of this application is applicable;

FIG. 4 is another diagram of a network architecture to which a method to which an embodiment of this application is applicable;

FIG. 5 is a block diagram of a system for suppressing OFDM by using a TR pattern to which an embodiment of this application is applicable;

FIG. 6 is an implementation block diagram of suppressing a PAPR by using a TR pattern to which an embodiment of this application is applicable;

FIG. 7 is a schematic flowchart of a communication method to which an embodiment of this application is applicable;

FIG. 8 is a diagram of generating a TR pattern to which an embodiment of this application is applicable;

FIG. 9 is another diagram of generating a TR pattern to which an embodiment of this application is applicable;

FIG. 10 is a diagram of PAPR suppression performance in different TR patterns to which an embodiment of this application is applicable;

FIG. 11 is still another diagram of generating a TR pattern to which an embodiment of this application is applicable;

FIG. 12 is another diagram of PAPR suppression performance in different TR patterns to which an embodiment of this application is applicable;

FIG. 13 is a block diagram of a communication apparatus to which an embodiment of this application is applicable; and

FIG. 14 is a block diagram of a structure of a communication apparatus to which an embodiment of this application is applicable.

## DESCRIPTION OF EMBODIMENTS

The following describes technical solutions in this application with reference to accompanying drawings.

The technical solutions in embodiments of this application are applied to various communication systems, such as a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (LTE) system, an advanced long term evolution (LTE-A) system, an LTE frequency division duplex (Frequency Division Duplex, FDD) system, LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, a next-generation communication system (like a 5th generation (fifth-generation, 5G) communication system), an integrated system of a plurality of access systems, an evolved system, three application scenarios of a 5G mobile communication system: eMBB, URLLC, and eMTC, or a future new emerging communication system. The technical solutions provided in this application are further applied to a future communication system, like a 6th generation mobile communication system. This is not limited in this application.

The technical solutions provided in this application are further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X can stand for anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

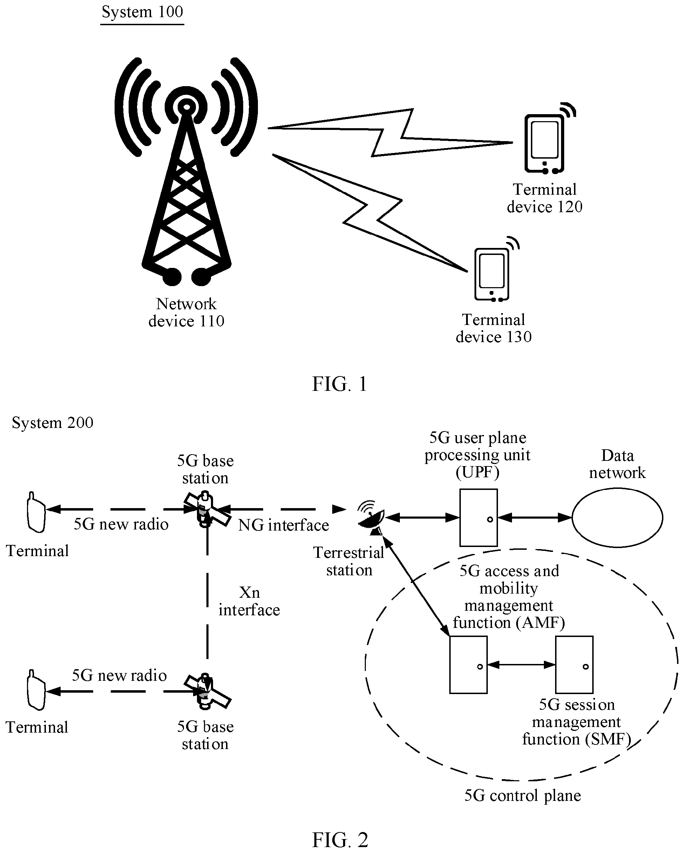

A network device (for example, a network device 110 in FIG. 1) in embodiments of this application is an apparatus that is deployed in a radio access network and that provides a wireless communication function for a mobile station (mobile station, MS), like a base station. The base station may include a macro base station, a micro base station (also referred to as a small cell), a relay station, an access point, and the like in various forms. In systems using different radio access technologies, names of a device having a base station function may be different. For example, in a 3rd generation (3rd generation, 3G) system, the device is referred to as a NodeB (NodeB), in an LTE system, the device is referred to as an evolved NodeB (evolved NodeB, eNB, or eNodeB), and in a 5G system, the device is referred to as a next generation nodeB (next generation NodeB, gNB). In addition, the network device may be a device bearing a base station function in device to device (device to device, D2D), machine type communication, or internet of vehicles communication, a satellite device, a base station device in a future communication network, or the like. For ease of description, in all embodiments of this application, the apparatuses that provide the wireless communication function for the MS are collectively referred to as network devices, base stations, or BSs. In this application, the base station may also be referred to as a base station device.

A terminal device (for example, a terminal device 120 or a terminal device 130 in FIG. 1) in embodiments of this application includes various mobile terminals and uncrewed aerial vehicles that have a wireless communication function, for example, a handheld device, a vehicle-mounted device, a wearable device, a computing device, or another processing device connected to a wireless modem, and may be specifically user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. Alternatively, the terminal device may be a satellite phone, a cellular phone, a smartphone, a wireless data card, a wireless modem, a machine type communication (machine type communication, MTC) device, a terminal device in a 5G network, or a future communication network, or the like. The terminal device is also be referred to as user equipment (user equipment, UE), a terminal, or the like.

FIG. 1 is a diagram of a network architecture to which an embodiment of this application is applicable. As shown in FIG. 1, a communication system includes one or more network devices (for example, 110 in FIG. 1). The network device 110 communicates with one or more terminal devices, for example, terminal devices 120 and 130 in FIG. 1. It should be understood that, in FIG. 1, only one network device 110 and two terminal devices 120 and 130 are used as an example. The communication system is not limited to including more network devices, and each network device is not limited to communicating with one or more terminal devices.

In addition, communication between the network device and the terminal device may be uplink transmission, or may be downlink transmission. This is not limited. For example, in downlink transmission, in this application, a transmitting end is the network device, for example, a base station device, and a receiving end is the terminal device. In uplink transmission, in this application, a transmitting end is the terminal device, and a receiving end is the network device, for example, a base station device.

It may be understood that FIG. 1 shows merely an example, and does not constitute any limitation on the protection scope of this application. A communication method provided in embodiments of this application may relate to a network element that is not shown in FIG. 1. Certainly, the communication method provided in embodiments of this application may alternatively include only some network elements shown in FIG. 1.

It may be understood that the network architecture used in embodiments of this application is merely an example, and a network architecture to which embodiments of this application are applicable is not limited thereto. Any network architecture that can implement functions of the foregoing network elements is applicable to embodiments of this application.

In addition, the solutions provided in this application are applied to the field of satellite communication, for example, members of 3GPP integrate satellite communication and 5G technologies. FIG. 2 shows a network application architecture of the technology. A ground mobile terminal UE accesses a network through 5G new radio. A 5G base station is deployed on a satellite, and is connected to a core network on the ground through a radio link. In addition, a radio link exists between satellites, to perform signaling exchange and user data transmission between base stations. Network elements and interfaces of the network elements in FIG. 2 are described as follows.

A terminal device is a mobile device that supports 5G new radio, and is typically a mobile device like a smartphone and a pad. The terminal device may access the satellite network through an air interface and initiate services such as call and internet access.

The 5G base station mainly provides a wireless access service, schedules a radio resource for an access terminal, provides a reliable wireless transmission protocol and data encryption protocol, and the like.

A 5G core network provides services such as user access control, mobility management, session management, user security authentication, and charging; and the 5G core network includes a plurality of functional units, which can be classified into a control-plane functional entity and a data-plane functional entity. An access and mobility management unit (access and mobility management function, AMF) is responsible for user access management, security authentication, and mobility management. A user plane unit (user plane unit, UPF) is responsible for managing functions such as user plane data transmission, traffic statistics collection, and security eavesdropping. A session management unit (session management function, SMF) is responsible for interacting with a separated data plane.

A terrestrial station is responsible for forwarding signaling and service data between a satellite base station and the 5G core network.

5G new radio is the radio link between the terminal and the base station.

An Xn interface is an interface between the 5G base station and the base station, and is for signaling exchange such as handover.

An NG interface is an interface between the 5G base station and the 5G core network, and mainly exchanges NAS or other signaling of the core network and service data of a user.

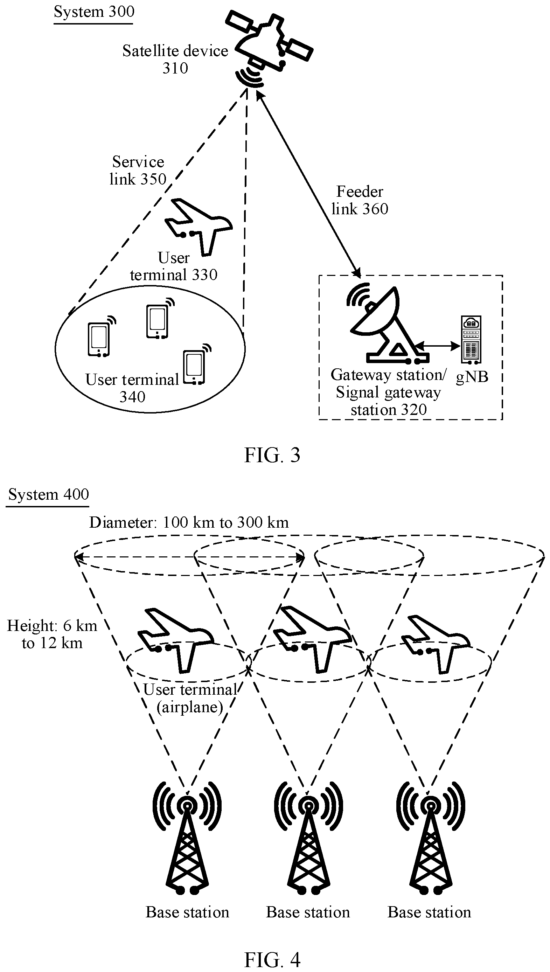

For example, FIG. 3 is another diagram of a network architecture to which a satellite communication scenario to which an embodiment of this application is applicable. In this scenario, a network device includes a satellite device 310 and a gateway station/signal gateway (gateway) station 320. A user terminal includes an internet of things terminal, or may be a terminal of another form and performance, for example, a mobile phone mobile terminal 340 and a high-altitude airplane 330 shown in FIG. 3. This is not limited herein. A link between a satellite and the user terminal is referred to as a service link (service link) 350, and a link between the satellite and the gateway station is referred to as a feeder link (feeder link) 360. The solutions in the present invention are applied to a multi-satellite communication scenario extended from the communication scenario shown in FIG. 3.

An operating mode of the satellite device may be a transparent (transparent) transmission mode and a regenerative (regenerative) mode. When the satellite operates in the transparent (transparent) transmission mode, the satellite has a relay forwarding function. The gateway station has functions or some functions of a base station. In this case, the gateway station may be considered as a base station. Alternatively, if a base station and the gateway station are separately deployed, a delay of the feeder link includes a delay from the satellite to the gateway station and a delay from the gateway station to a gNB. In the transparent transmission mode, a case in which the gateway station and the gNB are located together or close to each other is used as an example. In a case in which the gateway station is far away from the gNB, a delay of the feeder link is a sum of a delay from the satellite to the gateway station and a delay from the gateway station to the gNB.

When the satellite operates in the regenerative (regenerative) mode, the satellite has a data processing capability and has functions or some functions of a base station. In this case, the satellite may be considered as a base station. In addition, the gNB (base station) is connected to a core network.

For another example, FIG. 4 is another diagram of a network architecture to which an embodiment of this application is applicable. FIG. 4 shows an air to ground (air to ground) ATG communication scenario. A network device includes a ground base station, and a user terminal includes a high-altitude airplane, an on-board handheld terminal, and the like.

With continuous development of a 5th generation (5th generation, 5G) communication system, in terrestrial cellular network communication or NTN communication, it is required that a high power amplifier (High Power Amplifier, HPA) at a transmitting end operate near a linear saturation region, to improve power efficiency of a satellite device as much as possible. However, when the HPA operates near a saturation point, there is a specific probability that a signal input to the HPA enters a non-linear region and generates non-linear distortion. For example, when a system performs data transmission through an orthogonal frequency division multiplexing (Orthogonal Frequency Division Multiplexing, OFDM) waveform with a high peak-to-average power ratio (Peak-to-Average Power Ratio, PAPR), the high PAPR imposes high requirements on linear ranges of power amplifiers in a transmitter machine and a receiver machine. If the linear ranges of the amplifiers cannot meet a dynamic change range of a signal, the signal may be nonlinearly distorted. As a result, spectrum leakage is caused, orthogonality between sub-carriers is damaged, inter-carrier interference is generated, and system performance is reduced. Therefore, how to avoid non-linear distortion generated by a signal input to an HPA in a communication system has become the focus of research.

Currently, a tone reservation or tone reservation (Tone Reservation, TR) technology can effectively suppress a PAPR of an OFDM waveform, or the like. Common communication systems include a multi-carrier (multi-carrier, MC) solution. In embodiments of this application, an orthogonal frequency division multiplexing (Orthogonal Frequency Division Multiplexing, OFDM) technology is used as an example for description of the multi-carrier. This solution is also be applied to another waveform, for example, applied to a DFT-S-OFDM waveform. In other words, DFT precoding may be first performed on data, and then precoded data is mapped to a frequency domain data sub-carrier. This is not limited in embodiments of this application. The solutions in this application are applied to downlink transmission and uplink transmission.

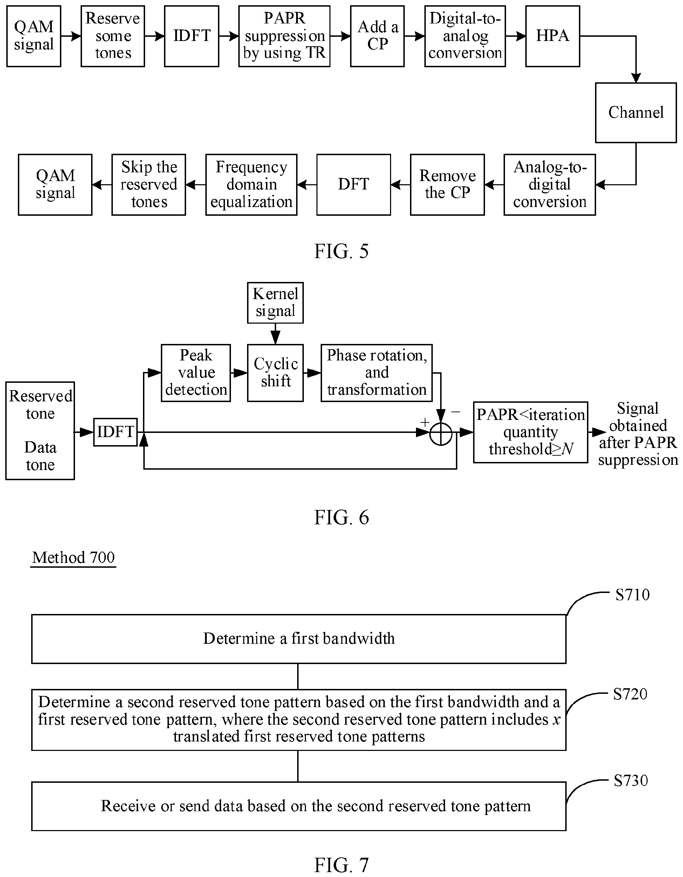

FIG. 5 shows a block diagram of a system for suppressing a PAPR of an OFDM signal by using a TR scheme. At an OFDM transmitting end, a module for reserving some tones and a module for suppressing the PAPR by using the TR scheme are added at the transmitting end, to perform IDFT (inverse discrete Fourier transform) on signals, convert the signals to signals in time domain, add a CP to the signals to obtain continuous-time signals through digital-to-analog conversion (digital-to-analog converter, DAC), and then transmit signals obtained after being amplified by an HPA. The signals reach a receiving end through the ground or an NTN channel. Correspondingly, at the receiving end, the received continuous-time signals are sampled, discrete-time signals are obtained through analog-to-digital conversion (analog-to-digital converter, ADC), DFT (discrete Fourier transform) is performed on the signals, to convert the signals to signals in frequency domain, frequency domain equalization is performed on the signals, and then data is decoded. The reserved tones (reserved tones) for suppressing the PAPR at the transmitting end are skipped or removed, in other words, signals on the tones are not decoded.

FIG. 6 is an implementation block diagram of suppressing a PAPR by using a TR pattern.

At a transmitting end, some tones (in-band or out-of-band tones) are reserved as reserved tones or reserved tones (reserved tones) for suppressing the PAPR, and carry signals for PAPR suppression. Other tones (data tones data tones) may be used to transmit actual useful data. It should be noted that, to improve spectral efficiency, the useful data may also be transmitted on the reserved tones, and the tones are for suppressing the PAPR. To be specific, generally, a reserved tone set carrying the signals for PAPR suppression and a data tone set carrying the useful data do not overlap each other, but in a scenario in which high spectral efficiency is required, the two sets overlap. In the following solution descriptions, an example in which a reserved tone set carrying signals for PAPR suppression and a data tone set carrying useful data do not overlap each other is used for description.

At the transmitting end, the reserved tones are used to generate normalized kernel (kernel) time domain signals to suppress the PAPRs of the OFDM signals, in other words, the kernel (kernel) signals occupy only the reserved tones in frequency domain. This can ensure that the kernel signals for PAPR suppression and data signals are orthogonal in frequency domain, and avoid mutual interference. A pattern (pattern) formed by index numbers corresponding to the reserved tones is referred to as a tone reservation pattern or a reserved tone pattern (TR pattern), and is used to represent a set of the reserved tones for suppressing the PAPR. A feasible manner of generating a time domain kernel based on the reserved tone is as follows: As shown in FIG. 6, 1 is placed on the reserved tone, 0 is placed on another data sub-carrier, and the time domain kernel is obtained by transforming the reserved tone and the data sub-carrier to time domain.

A specific implementation method for suppressing the PAPR by using the TR pattern includes the following steps.

(1) Baseband data signals (for example, QAM signals) are mapped to the data tones, and the reserved tones are disposed of as zero (that is, data is not mapped in this case, and the reserved tones are used when the PAPR is suppressed subsequently).

(2) After IDFT is performed on the data mapped to the sub-carriers, time domain OFDM signals are obtained.

(3) Time domain peak value searching is performed on the obtained time domain OFDM signals, and a location, phase, and amplitude of a time domain peak value of an OFDM data block are found.

(4) Cyclic shift, phase rotation, and scale transformation are performed on the kernel time domain signals based on the location, phase, and amplitude of the time domain peak value of the OFDM data obtained in the previous step and a PAPR suppression threshold, so that a peak value of adjusted kernel time domain signals and the time domain peak value of the OFDM data have a same location and same phase, and residual power obtained by subtracting the peak value of the kernel time domain signals from the time domain peak value of the OFDM data is equal to a product of the preset PAPR suppression threshold and average power of the OFDM signals. The PAPR suppression threshold is a threshold in FIG. 5, for example, may be set to 6.5 dB or another value. The kernel time domain signals are cyclically shifted based on the location of the time domain peak value of the OFDM data, to ensure that the peak value of the shifted kernel time domain signals is at the same location as the peak value of the time domain OFDM signals.

For example, it is assumed that an OFDM signal before an iteration is $S_{in}$, an OFDM signal after one PAPR suppression iteration is $S_{out}$, and a time-domain Kernel signal is P. $P_{(k)}$ represents performing cyclic shift on the signal P by a length k, that is, $P_{(k)} = circshift(P,k)$. A location of a peak value of the signal $P_{(k)} = circshift(P,k)$ is k, a PAPR suppression amplitude threshold is $A_{thre}$, and a power threshold is $A_{thre}^2$. Therefore, the OFDM signal output after the PAPR suppression iteration may be represented as:

$$S_{out} = S_{in} - \frac{\left|S_{in}(k)\right| - A_{thre}}{P(k)} P_{(k)} exp\left(i\varnothing\left(S_{in}(k)\right)\right)$$

Herein, $i = \sqrt{-1}$, and $\varnothing(\cdot)$ represents taking a phase.

(5) The adjusted kernel time domain signal obtained in the previous step is subtracted from the OFDM time domain data, to obtain an OFDM time domain signal that completes one PAPR suppression iteration.

(6) If a PAPR value of the OFDM time domain signal whose PAPR is suppressed and that is obtained in the previous step is greater than the PAPR suppression threshold, and a quantity of iterations is less than a specified maximum quantity of iterations, the OFDM time domain signal whose PAPR is suppressed and that is obtained in the previous step is used as a time domain OFDM signal and is substituted into step 2 to perform a new round of PAPR suppression iteration. Alternatively, if a PAPR value of the OFDM time domain signal whose PAPR is suppressed and that is obtained in the previous step is not greater than the PAPR suppression threshold, or a quantity of iterations is not less than a specified maximum quantity of iterations, the OFDM time domain signal whose PAPR is suppressed and that is obtained in the previous step is used as a final OFDM time domain signal and is input to a next data processing module, for example, a CP adding module. In addition, it may be considered that power of the signals on the reserved tones cannot exceed a threshold (power/energy threshold). After an iteration, if power of a tone on the reserved tones (or average power of all reserved tones) is greater than, or greater than and equal to a specified power threshold, PAPR suppression iteration is stopped, and the OFDM time domain signal whose PAPR is suppressed and that is obtained in the previous step is used as the final OFDM time domain signal and is input to the next data processing module.

When a base station or UE uses different bandwidths, different TR patterns need to be used. Therefore, the base station and the UE need to store TR patterns corresponding to reserved tones of different bandwidths. Therefore, signaling/storage overheads of an actual system are high, and the solution is complex.

In view of this, this application provides the communication method and a communication apparatus, to generate, by reserving sub-carriers, tones applicable to different bandwidths. Therefore, signal PAPR suppression can be performed by using the reserved sub-carrier, and signaling storage overheads of a system and implementation complexity can be reduced.

The following describes the technical solution in this application.

FIG. 7 is a schematic flowchart of a communication method according to this application. Optionally, a procedure shown in FIG. 7 may be performed by a transmitting end (which may be a network device, or may be a terminal device), or may be performed by a receiving end (which may be a network device, or may be a terminal device), or may be performed by a module and/or a component (for example, a chip or an integrated circuit) that have corresponding functions and that are installed at the transmitting end or the receiving end. The following uses downlink transmission as an example for description.

710: Determine a first bandwidth BW1.

The first bandwidth BW1 is used for data transmission between the network device and the terminal device.

The transmitting end may determine the first bandwidth BW1 in a plurality of specific implementations. This is not limited in this application.

For example, the transmitting end may determine the first bandwidth BW1 based on a cell bandwidth. For another example, the transmitting end may determine the first bandwidth BW1 based on a carrier bandwidth or a system bandwidth. For still another example, the first bandwidth BW1 may be predefined. In addition, a person skilled in the art may also use another manner.

720: Determine a second reserved tone pattern based on the first bandwidth BW1 and a first reserved tone pattern.

The first reserved tone pattern is an index set of first reserved tones, the second reserved tone pattern is an index set of second reserved tones, a bandwidth corresponding to the second reserved tone pattern is the first bandwidth BW1, and a bandwidth corresponding to the first reserved tone pattern is a second bandwidth BW2.

In this application, L sub-carriers may be determined from N sub-carriers of a system as the first reserved tones. The first reserved tones are used to carry, in the second bandwidth BW2, signals for peak-to-average power ratio PAPR suppression. The tone index set corresponding to the first reserved tones is the first reserved tone pattern. L and N are positive integers, and L is less than N. The following describes how to specifically determine the L sub-carriers.

Specifically, the first reserved tone pattern is copied and translated by $X$ offset values in frequency domain to obtain the second reserved tone pattern. It may be understood that the second reserved tones are used to carry, in the first bandwidth BW1, signals for peak-to-average power ratio PAPR suppression. A specific method for copying and translating the tone pattern is described in detail below.

In this application, the obtained second reserved tone pattern includes $X$ translated first reserved tone patterns, $x = int(BW1 / BW2)$, and int represents rounding.

For example, the first reserved tone pattern is represented as a TR pattern 1, an offset value is $K_1$ ($K_1$ is an integer), the TR pattern 1 and a TR pattern obtained by copying and translating the TR pattern 1 jointly form a TR pattern 2 (the second reserved tone pattern), and the TR pattern 2 includes the TR pattern 1. For another example, offset values are $K_1$ and $K_2$ ($K_1$ and $K_2$ are integers), the TR pattern 1 and TR patterns obtained by copying and translating the TR pattern 1 twice jointly form a TR pattern 3, and the TR pattern 3 includes the TR pattern 1 and the two TR patterns obtained by copying and translating the TR pattern 1.

The following describes manners of determining the offset value and the first reserved tone pattern.

In this application, methods of determining the offset value include the following five methods.

Manner 1

In an implementation, a first communication apparatus is used as an example of the terminal device, and a second communication apparatus is used as an example of the network device. The second communication apparatus sends the $X$ offset values to the first communication apparatus. Correspondingly, the first communication apparatus may receive the $X$ offset values from the second communication apparatus.

In an optional implementation, if a reference signal of the first bandwidth BW1 is considered, the offset values sent by the second communication apparatus to the first communication apparatus may be an integer multiple of a reciprocal of reference signal density of the first bandwidth $BW1$.

For example, if reference signal density of the first bandwidth $BW1$ is 1/4, a quantity of the offset values sent by the second communication apparatus to the first communication apparatus may be an integer multiple of 4. Optionally, the second communication apparatus sends a multiple X of a reciprocal of reference signal density to the first communication apparatus, and the second communication apparatus and the first communication apparatus determine the offset values based on the configured reference signal density and the multiple X, that is, a quantity of the offset values=X*(1/reference signal density). For example, when the second communication apparatus sends a multiple X=36 to the first communication apparatus, and reference signal density is 1/4, a quantity of the offset values=36*4=144.

Manner 2

In another implementation, the transmitting end may determine the $X$ offset values based on the first bandwidth $BW1$.

For example, downlink transmission is used as an example, and offset values used are agreed on based on a carrier bandwidth. For example, when a carrier bandwidth is 100 M, a basic TR pattern (TR pattern 1) is used; when a carrier bandwidth is 200 M, an offset value $K_1$=792 and a basic TR pattern are used to generate a new TR pattern 2, and the new TR pattern 2 is used; or when a carrier bandwidth is 400 M, offset values $K_1$=792, $K_2$=1584, $K_3$=2376 and a basic TR pattern are used to generate a new TR pattern 3, and the new TR pattern 3 is used. The foregoing is merely an example for description, and this is not limited in this embodiment of this application.

In an optional implementation, a calculation relationship between the offset values and the first bandwidth (or a quantity of RBs corresponding to the bandwidth) may be agreed on.

For example, it is agreed and determined that a quantity of offset values is equal to a product of 12 and the quantity of RBs corresponding to the bandwidth. For example, if a quantity of RBs corresponding to a system bandwidth=50, a quantity of offsets=50*12=600. For another example, a basic TR pattern is applicable to a quantity of RBs=65 (50 MHz bandwidth). When the basic TR pattern is extended to be applicable to a quantity of RBs=135 (100 MHz), it may be agreed that a quantity of offset values 65*12=780 is determined based on the quantity of RBs=65 corresponding to the bandwidth to which the basic TR pattern is applicable, that is, the quantity of offset values=the quantity of RBs corresponding to the bandwidth*12, and then a TR pattern applicable to a quantity of RBs=135 is generated based on the offset values and the basic TR pattern. For another example, a basic TR pattern is applicable to a quantity of RBs=65 (50 MHz bandwidth). When the basic TR pattern is extended to be applicable to a quantity of RBs=135 (100 MHz), it may be agreed that a quantity of offset values 135*12/2=810 is determined based on the quantity of RBs=135 corresponding to a bandwidth to be converted, that is, the quantity of offset values=the quantity of RBs corresponding to the bandwidth*12/2, and then a TR pattern applicable to the quantity of RBs=135 is generated based on the offset values and the basic TR pattern. Optionally, when a TR pattern 1 is extended to a TR pattern 2, if a quantity of RBs is not an integer multiple, remaining RBs may be filled by using some reserved sub-carriers in the TR pattern 1. For example, when a TR pattern 1 applicable to a quantity of RBs=65 is extended to a TR pattern 2 applicable to a quantity of RBs=135, the remaining 5 RBs in the 135 RBs except twice the 65 RBs corresponding to the TR pattern 1 may be filled by using the reserved sub-carriers included in first 5 RBs of the TR pattern 1.

Manner 3

In another implementation, the transmitting end may determine the $X$ offset values based on a quantity of RBs corresponding to the first bandwidth $BW1$.

For example, when a quantity of RBs=66, a basic TR pattern (TR pattern 1) is used; when a quantity of RBs=132, an offset value $K_1$=792 and a basic TR pattern are used to generate a new TR pattern 2, and the new TR pattern 2 is used; or when a quantity of RBs=264, offset values $K_1$=792, $K_2$=1584, $K_3$=2376 and a basic TR pattern are used to generate a new TR pattern 3, and the new TR pattern 3 is used. The foregoing is merely an example for description, and this is not limited in this embodiment of this application.

Manner 4

In another implementation, the transmitting end may determine the *X* offset values based on an IFFT length.

For example, when a used IFFT length is 1024, a basic TR pattern (TR pattern 1) is used; when a used IFFT length is 2048, an offset value $K_1$=792 and a basic TR pattern are used to generate a new TR pattern 2, and the new TR pattern 2 is used; or when a used IFFT length is 4096, offset values $K_1$=792, $K_2$=1584, $K_3$=2376 and a basic TR pattern are used to generate a new TR pattern 3, and the new TR pattern 3 is used. The foregoing is merely an example for description, and this is not limited in this embodiment of this application.

Manner 5

In another implementation, a mapping relationship between the first bandwidth or a quantity of RBs corresponding to the first bandwidth and the offset values is preconfigured at the transmitting end and the receiving end.

For example, when the first bandwidth is mapped to the offset values, offset values corresponding to different bandwidths may be agreed on by using a protocol, and a new TR pattern to be used is determined based on a basic TR pattern and the offset values. For another example, when a quantity of RBs is mapped to the offset values, offset values corresponding to different quantity of RBs may be agreed on by using a protocol, and a new TR pattern to be used is determined based on a basic TR pattern and the offset values.

In this application, methods of determining the first reserved tone pattern include the following three methods.

Manner 1

The first reserved tone pattern is determined based on the second bandwidth or a quantity of RBs occupied by the second bandwidth.

Specifically, a quantity of occupied sub-carriers is determined based on an actual carrier bandwidth or a quantity of RBs occupied by a bandwidth, and index numbers of sub-carriers whose quantity is less than or equal to, or less than the quantity of occupied sub-carriers are intercepted from a reserved sub-carrier set (initial TR pattern) as the first reserved tones (basic TR pattern). In other words, sub-carriers in a reserved sub-carrier set that are in a range of RBs occupied by an actual carrier bandwidth form the first reserved tones.

Manner 2

The first reserved tone pattern is preconfigured at the transmitting end and the receiving end.

Manner 3

The first communication apparatus is used as an example of the terminal device, and the second communication apparatus is used as an example of the network device. The second communication apparatus sends the first reserved tone pattern to the first communication apparatus. Correspondingly, the first communication apparatus may receive the first reserved tone pattern from the second communication apparatus.

In a possible implementation, the second communication apparatus indicates the first communication apparatus to select some sub-carriers in an initial reserved sub-carrier set as the first reserved tone pattern.

For example, if a base station determines, based on a requirement on PAPR suppression, for example, power amplifier performance, that a 3 dB PAPR needs to be suppressed, and 20 sub-carriers are reserved to achieve the suppression performance, the base station indicates UE to use the sub-carriers whose length is 20 (20 reserved tones) in an initial TR pattern (initial reserved sub-carrier set) as a basic TR pattern.

In a possible implementation, the first communication apparatus and the second communication apparatus preconfigure a plurality of reserved tone patterns, and the second communication apparatus may indicate, to the first communication apparatus, which reserved tone pattern is used as the first reserved tone pattern.

730: Receive or send data based on the second reserved tone pattern.

Specifically, uplink or downlink data transmission is performed based on the second reserved tones. For example, methods in FIG. 5 and FIG. 6 may be used. A specific transmission manner is not limited in this embodiment of this application.

In a possible implementation, the first communication apparatus may further receive the *X* offset values, and determine the second reserved tone pattern based on the *X* offset values and the first reserved tone pattern. Correspondingly, the second communication apparatus sends the *X* offset values, and determines the second reserved tone pattern based on the *X* offset values and the first reserved tone pattern.

In this solution, in a possible implementation, the network device sends the offset values to the terminal device, so that the network device and the terminal device perform replication and offset on a current bandwidth to obtain a new reserved tone pattern, and perform data transmission based on the new reserved tone pattern. This solution is used to improve a signal PAPR suppression capability and improve communication performance in a larger bandwidth or the current bandwidth.

In another possible implementation, the network device sends the offset values to the terminal device, so that the network device and the terminal device perform replication and offset on the first bandwidth (or a frequency domain resource having a specific quantity of RBs) to obtain a new reserved tone pattern, and perform data transmission based on the new reserved tone pattern.

According to the solution in this embodiment of this application, reserved tone patterns applicable to larger bandwidths, different RB resources, or different IFFT lengths may be determined by copying and translating a basic reserved tone pattern. Therefore, signal PAPR suppression can be performed by using a reserved sub-carrier, and signaling storage overheads of a system and implementation complexity can be reduced.

The following describes manners of generating the second reserved tone pattern.

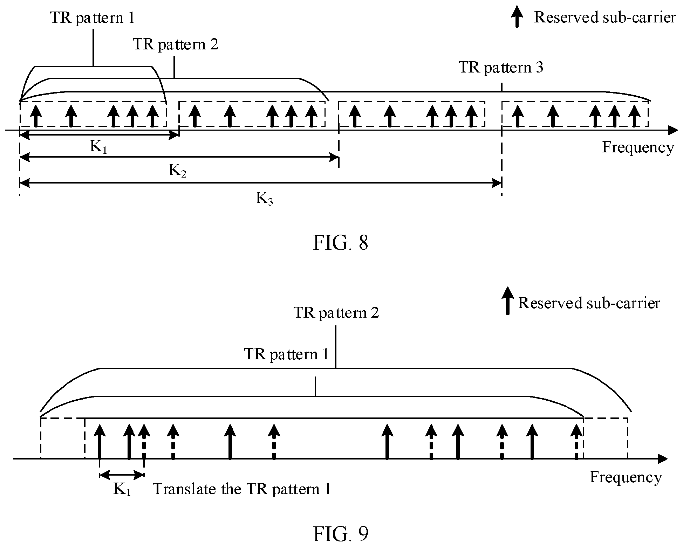

FIG. 8 is a diagram of generating a TR pattern according to this application. In an embodiment of this application, a first reserved tone pattern is used as an example of a basic reserved tone pattern. The first reserved tone pattern may be represented as a TR pattern 1. A second reserved tone pattern generated based on the basic reserved tone pattern may be represented as a TR pattern 2, a TR pattern 3, or the like. An offset value is represented by $K_x$, and $x$ represents a quantity of offset times. For example, $K_1$ represents a displacement value of a first offset performed on the TR pattern 1, and $K_2$ represents a displacement value of a second offset performed on the TR pattern 1.

The following describes a specific copying and translation method.

Specifically, after the first TR pattern and the offset value are determined, a network device and a terminal device copy the first TR pattern in frequency domain, and then perform translation by using the offset value as a displacement value, to obtain a copied first TR pattern after translation, and the first TR pattern and the first TR pattern obtained by copying and translation jointly form a second TR pattern (TR pattern 2). As shown in FIG. 8, when the offset value is $K_1$, it may be understood that the TR pattern 1 is copied once, that is, the TR pattern 1 is copied and translated for the displacement value $K_1$ to obtain the TR pattern 2, where the TR pattern 2 includes the TR pattern 1 and a TR pattern 1 obtained by the first copying. When the offset values are $K_1$, $K_2$, and $K_3$, it may be understood that the TR pattern 1 is copied for three times and translated for the three offsets, that is, the TR pattern 1 is copied for a first time and then translated for the displacement value $K_1$, the TR pattern 1 is copied for a second time and then translated for the displacement value $K_2$, the TR pattern 1 is copied for a third time and then translated for the displacement value $K_3$, and three times of copying and translation are performed to obtain a TR pattern 3, where the TR pattern 3 includes the TR pattern 1 and TR patterns 1 obtained by the three times of copying.

It should be noted that, in this application, translation may be understood as a sum of a sub-carrier index (or a sub-carrier number) and an offset value. For example, sub-carrier index numbers of reserved tones in the TR pattern 1 and the offset value $K_1$ are added, and sub-carrier index number of the reserved tone in the original TR pattern 1 jointly form the TR pattern 2.

It should be noted that, in the method shown in FIG. 8, the offset value is greater than a range of the TR pattern 1. In a possible implementation, the offset value may be less than the range of the TR pattern 1, that is, a smaller offset value is used to perform translation and superposition based on the TR pattern 1 to generate the second TR pattern. In a copying and translation method shown in FIG. 9, solid-line arrows in the figure represent combinations of TR patterns 1, and dashed-line arrows represent that the TR patterns 1 are translated for a value $K_1$, and the two are combined into a new TR pattern 2.

The following describes the foregoing method in detail by using a specific example.

For example, Table 1 shows sub-carrier index numbers in a TR pattern 1.

**Table 1**

| 1 | 2 | 3 | 4 | 5 | 6 | 7 | 8 | 9 | 10 |
|-----|-----|-----|-----|-----|-----|-----|-----|-----|-----|
| 42 | 254 | 259 | 379 | 261 | 3 | 367 | 63 | 95 | 39 |
| 11 | 12 | 13 | 14 | 15 | 16 | 17 | 18 | 19 | 20 |
| 130 | 117 | 605 | 431 | 715 | 405 | 707 | 705 | 535 | 466 |
| 21 | 22 | 23 | 24 | | | | | | |
| 661 | 786 | 550 | 565 | | | | | | |

For example, the foregoing Table 1 lists an example of sub-carrier sequence numbers in a basic TR pattern. Odd-numbered rows represent sequence numbers of elements in the TR pattern 1, and even-numbered rows represent sub-carrier sequence numbers of reserved tones in the TR pattern 1.

For example, downlink transmission is used as an example, and the reserved tone is represented starting from a first tone in a cell bandwidth/carrier bandwidth/system bandwidth. The TR pattern 1 includes 24 sub-carriers. The sub-carrier sequence numbers represented in Table 1 start from 0. A sequence number of the first sub-carrier is 42, and it means that a first element represents that a sub-carrier in the reserved tones is a 43rd sub-carrier in the cell bandwidth/carrier bandwidth/system bandwidth; a sequence number of a second sub-carrier is 254, and this means that a second element represents that a sub-carrier in the reserved tones is a 255th sub-carrier in the cell bandwidth/carrier bandwidth/system bandwidth; and so on.

It may be understood that the reserved tones in the foregoing Table 1 may carry signals for PAPR suppression.

In this application, another TR pattern may be generated based on the reserved tones in the TR pattern 1 in the foregoing Table 1 as a basic TR pattern. Reserved tones in the another TR pattern may also carry signals for PAPR suppression.

In an example, if a sub-carrier sequence number starts from 1, a new TR pattern may be obtained according to the following formula: *reserved tones index new* = mod(*reserved tones index old* + $\Delta k$ - 1,*IFFT_length*) + 1.

Herein, reserved tones index old represents the index numbers of the reserved tones in the basic TR pattern 1, reserved tones index new represents index numbers of reserved tones in the generated new TR pattern, $\Delta k$ represents an overall offset value or a cyclic shift value (an integer value) of the TR pattern 1, and IFFT_length represents a cyclic shift periodicity (for example, related to a bandwidth, related to a quantity of RBs occupied in a frequency domain resource, or related to an IFFT length for generating an OFDM signal) of the index numbers of the new reserved tones.

In another example, if a sub-carrier sequence number starts from 0, a new TR pattern (second TR pattern) may be obtained according to the following formula:

$$reserved\ tones\ index\ new = \mathrm{mod}(reserved\ tones\ index\ old + \Delta k, IFFT\_length).$$

In still another example, a new TR pattern table may be obtained by performing cyclic shift on the reserved tone index numbers in the TR pattern 1. Cyclic shift may be performed to obtain a new TR pattern according to the following formula:

$$reserved\ tones\ index\ new = circleshift(reserved\ tones\ index\ old, \Delta k, IFFT\_length).$$

Herein, *d* = *circleshift*(*a*,*b*,*c*) represents that a value d is obtained by performing cyclic shift based on a periodicity c after a value a is offset by a value b.

For example, when offset values are $K_1$=792, $K_2$=1584, and $K_3$=2376, the TR pattern in Table 1 is used as the first TR pattern to generate a second TR pattern (TR pattern 3), as shown in Table 2.

**Table 2**

| 1 | 2 | 3 | 4 | 5 | 6 | 7 | 8 | 9 | 10 |
|---|---|---|---|---|---|---|---|---|---|
| 42 | 254 | 259 | 379 | 261 | 3 | 367 | 63 | 95 | 39 |
| 11 | 12 | 13 | 14 | 15 | 16 | 17 | 18 | 19 | 20 |
| 130 | 117 | 605 | 431 | 715 | 405 | 707 | 705 | 535 | 466 |
| 21 | 22 | 23 | 24 | 25 | 26 | 27 | 28 | 29 | 30 |
| 661 | 786 | 550 | 565 | 834 | 1046 | 1051 | 1171 | 1053 | 795 |
| 31 | 32 | 33 | 34 | 35 | 36 | 37 | 38 | 39 | 40 |
| 1159 | 855 | 887 | 831 | 922 | 909 | 1397 | 1223 | 1507 | 1197 |
| 41 | 42 | 43 | 44 | 45 | 46 | 47 | 48 | 49 | 50 |
| 1499 | 1497 | 1327 | 1258 | 1453 | 1578 | 1342 | 1357 | 1626 | 1838 |
| 51 | 52 | 53 | 54 | 55 | 56 | 57 | 58 | 59 | 60 |
| 1843 | 1963 | 1845 | 1587 | 1951 | 1647 | 1679 | 1623 | 1714 | 1701 |
| 61 | 62 | 63 | 64 | 65 | 66 | 67 | 68 | 69 | 70 |
| 2189 | 2015 | 2299 | 1989 | 2291 | 2289 | 2119 | 2050 | 2245 | 2370 |
| 71 | 72 | 73 | 74 | 75 | 76 | 77 | 78 | 79 | 80 |

(continued)

| 2134 | 2149 | 2418 | 2630 | 2635 | 2755 | 2637 | 2379 | 2743 | 2439 |
|---|---|---|---|---|---|---|---|---|---|
| 81 | 82 | 83 | 84 | 85 | 86 | 87 | 88 | 89 | 90 |
| 2471 | 2415 | 2506 | 2493 | 2981 | 2807 | 3091 | 2781 | 3083 | 3081 |
| 91 | 92 | 93 | 94 | 95 | 96 | | | | |
| 2911 | 2842 | 3037 | 3162 | 2926 | 2941 | | | | |

It should be noted that Table 2 is merely an example of the second TR pattern, and the TR pattern in Table 1 may also be copied and translated based on another offset value, to obtain a new TR pattern. For example, when offset values are $K_1$=792 and $K_2$=1584, the TR pattern in Table 1 is used as the first TR pattern to generate a second TR pattern (TR pattern 2). Values of $K_1$ and $K_2$ are used as examples. This is not limited in this embodiment of this application.

In this application, for downlink transmission, different TR patterns are applicable to different carrier bandwidths, different quantities of RBs, or different used IFFT lengths. For uplink transmission, different TR patterns are applicable to different bandwidths, different quantities of RBs, or different used IFFT lengths used by UE.

In a possible implementation, the second TR patterns (the foregoing TR pattern 2 and TR pattern 3 are used as examples) generated by using the foregoing method are applicable to different bandwidths, different quantities of RBs corresponding to different bandwidths, or different used IFFT lengths.

The following Table 3 lists mapping relationships between different TR patterns and different bandwidths, different quantities of RBs corresponding to different bandwidths, or different used IFFT lengths. The bandwidths, the quantities of RBs, and the IFFT lengths in Table 3 are merely examples for description. This is not limited in this embodiment of this application.

**Table 3**

| Bandwidth (MHz) SCS=120 kHz | RB num | IFFT length | TR pattern | TR pattern length |
|---|---|---|---|---|
| 100 | 66 | 1024 | TR pattern 1 | 24 |
| 200 | 132 | 2048 | TR pattern 2 | 48 |
| 400 | 264 | 4096 | TR pattern 3 | 96 |

As shown in Table 3, the bandwidth (a second bandwidth $BW2$) corresponding to the TR pattern 1 (an example of a first reserved tone pattern) is 100 MHz, the bandwidth (a first bandwidth $BW1$) corresponding to a TR pattern 2 (an example of a second reserved tone pattern) is 200 MHz, and the TR pattern 2 includes $X$ translated TR patterns 1, where $x$ = int($BW1$ / $BW2$), that is, the TR pattern 2 includes two TR patterns 1.

It should be noted that int represents rounding, rounding up, or rounding down. For example, when a bandwidth corresponding to a TR pattern 2 is 150 MHz, when int represents rounding up, the TR pattern 2 includes two TR patterns 1; or when int represents rounding down, the TR pattern 2 includes one TR pattern 1.

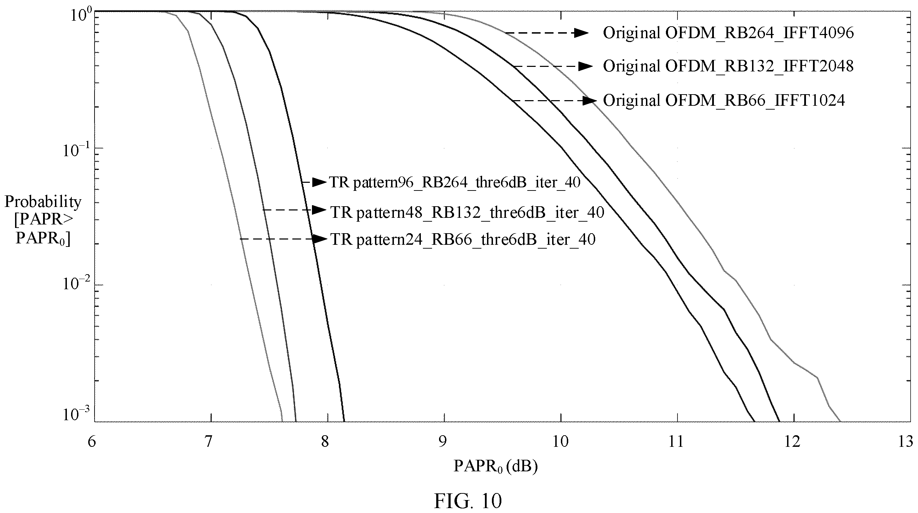

Corresponding TR patterns are obtained based on different bandwidths (different quantities of RBs or different IFFT lengths), for tone reservation in the module for reserving some sub-carriers in the method 500, thereby suppressing a signal PAPR. FIG. 10 shows simulation results of PAPR suppression performance in the TR patterns corresponding to the different bandwidths (different quantities of RBs or different IFFT lengths) listed in Table 3. As shown in FIG. 10, it can be seen that all the PAPR suppression performance may reach 4 dB, and the TR patterns obtained by using the copying and translation solution are applicable to PAPR suppression in the different bandwidths.

Optionally, after the second TR pattern is generated, some reserved sub-carriers in the second TR pattern may be selected, based on an actual carrier bandwidth (or a quantity of RBs of a used frequency domain resource), as a to-be-used TR pattern.

Specifically, index numbers of reserved tones included in the second TR pattern may be understood as sub-carrier index numbers in the carrier bandwidth. The network device and the UE determine the quantity of occupied sub-carriers Num_subcarrier (for example, the quantity of sub-carriers=the quantity of RBsx12) based on the used carrier bandwidth (carrier bandwidth), the quantity of RBs corresponding to the bandwidth, or the quantity of RBs in the used frequency domain resource. When the sub-carrier index number in the carrier bandwidth starts from 0, reserved tone index numbers not greater than (Num_subcarrier-1) are selected from the reserved tone index numbers in the second TR pattern to form a TR pattern to be used by the network device and the UE, that is, a combination of reserved tones of a to-be-used TR pattern is obtained based on the reserved tones index≤Num_subcarrier-1. Alternatively, when the sub-carrier index number in the carrier bandwidth starts from 1, reserved tone index numbers not greater than Num_subcarrier are selected from the reserved tone index numbers in the second TR pattern to form a TR pattern to be used by the network device and the UE, that is, a combination of reserved tone index numbers of a to-be-used TR pattern is obtained based on the reserved tones index≤Num_subcarrier.

For example, the network device may indicate the UE to select some reserved tones in the second TR pattern as a to-be-used TR pattern, that is, indicate a length of a to-be-used TR pattern to the UE.

For example, a base station indicates, based on an actual carrier bandwidth (or a quantity of RBs occupied by a carrier bandwidth or a quantity of RBs of a used frequency domain resource) or a requirement on PAPR suppression, UE to select some reserved tones in the second TR pattern as a to-be-used TR pattern. Specifically, the base station may use, based on the quantity of RBs occupied by the carrier bandwidth, first 56 reserved sub-carriers in the second TR pattern to form the to-be-used TR pattern, and indicate the UE to use the reserved tones whose length is 56 (first 56 reserved tones) in the second TR pattern as a second TR pattern.

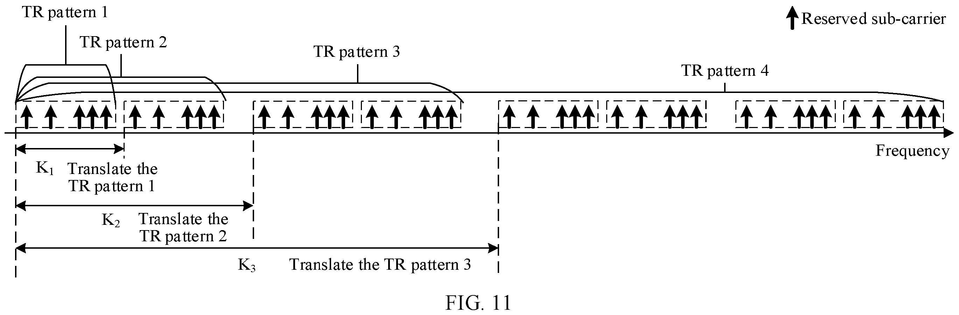

FIG. 11 is still another diagram of generating a TR pattern according to an embodiment of this application. In this embodiment of this application, a first reserved tone pattern (a first TR pattern) is used as an example of a basic reserved tone pattern. The first reserved tone pattern may be represented as a TR pattern 1. A second reserved tone pattern generated based on the basic reserved tone pattern may be represented as a TR pattern 2, a TR pattern 3, or the like. An offset value is represented by $K_x$, and $x$ represents a quantity of offset times. For example, $K_1$ represents a displacement value of a first offset, namely, a displacement value of an offset performed on the TR pattern 1, and $K_2$ represents a displacement value of a second offset, namely, an offset displacement value of the TR pattern 2 obtained by performing the first offset on the TR pattern 1.

The following describes a specific copying and translation method.

Specifically, after the first TR pattern and the offset value are determined, a network device and a terminal device copy the first TR pattern in frequency domain, and then perform translation by using the offset value as a displacement value, to obtain a copied first TR pattern after translation, and the first TR pattern and the TR pattern obtained by copying and translating the first TR pattern jointly form a second TR pattern. As shown in FIG. 11, when the offset value is $K_1$, it may be understood that the TR pattern 1 is copied once, that is, the TR pattern 1 is copied and translated for the displacement value $K_1$, and a TR pattern obtained by the copying and translation and the original TR pattern 1 jointly form a TR pattern 2, where the TR pattern 2 includes the TR pattern 1 and the TR pattern obtained by the first copying and translation on the TR pattern 1. When the offset values are $K_1$, $K_2$, and $K_3$, three times of translation need to be performed. In a first translation process, the TR pattern 1 is copied once and then translated by $K_1$, and a TR pattern obtained by the copying and translation and the original TR pattern 1 jointly form the TR pattern 2; in a second translation process, the TR pattern 2 is copied once and then translated by $K_2$, and a TR pattern obtained by the copying and translation and the original TR pattern 2 jointly form a TR pattern 3; and in a third translation process, the TR pattern 3 is copied once and then translated by $K_3$, and a TR pattern obtained by the copying and translation and the original TR pattern 3 jointly form a TR pattern 4.

The following describes the foregoing method in detail by using a specific example.

For example, Table 4 shows sub-carrier index numbers in a TR pattern 1.

**Table 4**

| 1 | 2 | 3 | 4 | 5 | 6 | 7 | 8 | 9 | 10 |
|---|---|---|---|---|---|---|---|---|---|
| 42 | 254 | 259 | 379 | 261 | 3 | 367 | 63 | 95 | 39 |
| 11 | 12 | | | | | | | | |
| 130 | 117 | | | | | | | | |

For example, the foregoing Table 4 lists an example of sub-carrier sequence numbers in a basic TR pattern. Specific meanings are the same as those in Table 1, and details are not described herein again.

In this application, another TR pattern may be generated based on the reserved tones in the TR pattern 1 in the foregoing Table 4 by using the foregoing copying and translation method. Reserved tones in the another TR pattern may also carry signals for PAPR suppression.

For example, when offset values are $K_1$=384, $K_2$=792, and $K_3$=1584, the TR pattern in Table 4 is used as the first TR pattern to generate a second TR pattern (TR pattern 4), as shown in Table 5.

**Table 5**

| 1 | 2 | 3 | 4 | 5 | 6 | 7 | 8 | 9 | 10 |
|---|---|---|---|---|---|---|---|---|---|
| 42 | 254 | 259 | 379 | 261 | 3 | 367 | 63 | 95 | 39 |
| 11 | 12 | 13 | 14 | 15 | 16 | 17 | 18 | 19 | 20 |

(continued)

| 130 | 117 | 426 | 638 | 643 | 763 | 645 | 387 | 751 | 447 |
|---|---|---|---|---|---|---|---|---|---|
| 21 | 22 | 23 | 24 | 25 | 26 | 27 | 28 | 29 | 30 |
| 479 | 423 | 514 | 501 | 834 | 1046 | 1051 | 1171 | 1053 | 795 |
| 31 | 32 | 33 | 34 | 35 | 36 | 37 | 38 | 39 | 40 |
| 1159 | 855 | 887 | 831 | 922 | 909 | 1218 | 1430 | 1435 | 1555 |
| 41 | 42 | 43 | 44 | 45 | 46 | 47 | 48 | 49 | 50 |
| 1437 | 1179 | 1543 | 1239 | 1271 | 1215 | 1306 | 1293 | 1626 | 1838 |
| 51 | 52 | 53 | 54 | 55 | 56 | 57 | 58 | 59 | 60 |
| 1843 | 1963 | 1845 | 1587 | 1951 | 1647 | 1679 | 1623 | 1714 | 1701 |
| 61 | 62 | 63 | 64 | 65 | 66 | 67 | 68 | 69 | 70 |
| 2010 | 2222 | 2227 | 2347 | 2229 | 1971 | 2335 | 2031 | 2063 | 2007 |
| 71 | 72 | 73 | 74 | 75 | 76 | 77 | 78 | 79 | 80 |
| 2098 | 2085 | 2418 | 2630 | 2635 | 2755 | 2637 | 2379 | 2743 | 2439 |
| 81 | 82 | 83 | 84 | 85 | 86 | 87 | 88 | 89 | 90 |
| 2471 | 2415 | 2506 | 2493 | 2802 | 3014 | 3019 | 3139 | 3021 | 2763 |
| 91 | 92 | 93 | 94 | 95 | 96 |  |  |  |  |
| 3127 | 2823 | 2855 | 2799 | 2890 | 2877 |  |  |  |  |

It should be noted that Table 5 is merely an example of the second TR pattern, and the TR pattern in Table 4 may also be copied and translated based on another offset value, to obtain a new TR pattern. For example, when offset values are $K_1$=792 and $K_2$=1584, the TR pattern in Table 4 is used as the first TR pattern to generate a second TR pattern (TR pattern 2). Values of $K_1$ and $K_2$ are used as examples. This is not limited in this embodiment of this application.

In a possible implementation, the second TR patterns (the foregoing TR pattern 2 and TR pattern 3 are used as examples) generated by using the foregoing method are applicable to different bandwidths, different quantities of RBs corresponding to different bandwidths, or different used IFFT lengths.

The following Table 6 lists mapping relationships between different TR patterns and different bandwidths. The bandwidths in Table 6 are merely examples for description. This is not limited in this embodiment of this application.

**Table 6**

| Bandwidth (MHz) SCS=120 kHz | RB num | TR pattern length |
|---|---|---|
| 50 | 32 | 12 |
| 100 | 66 | 24 |
| 200 | 132 | 48 |
| 400 | 264 | 96 |

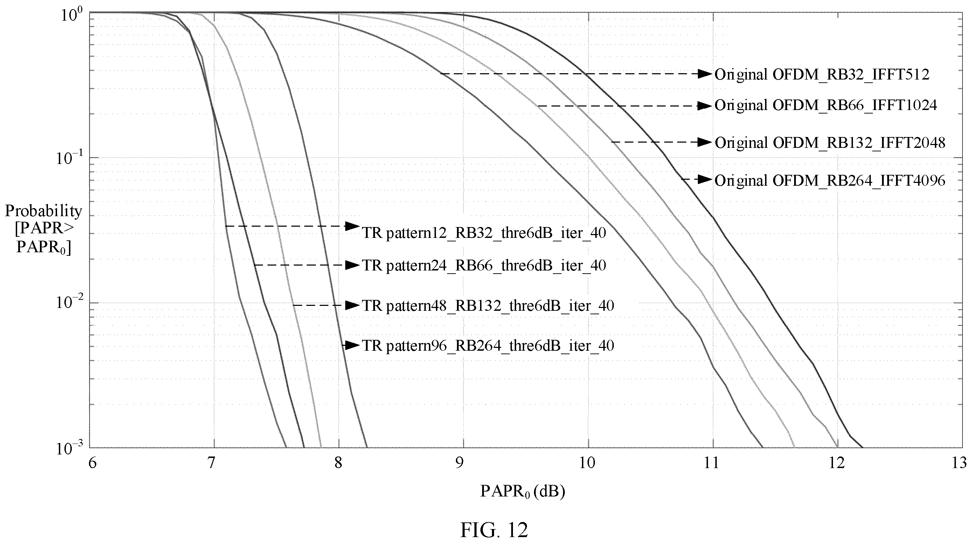

FIG. 12 shows simulation results of PAPR suppression performance in the TR patterns corresponding to the different bandwidths listed in Table 6. As shown in FIG. 12, it can be seen that the PAPR suppression performance may be about 4 dB, and the TR patterns obtained by using the copying and translation solution are applicable to PAPR suppression in the different bandwidths.

It should be noted that the offset value and the first TR pattern in this application may be sent by the network device to the terminal device, or may be agreed on in advance by using a protocol.

When the network device sends signaling parameters in this solution to the terminal device, for example, the first TR pattern, the offset value, the multiple X of the reciprocal of the reference signal density, the basic TR pattern length, the length of the to-be-used TR pattern, and the indicated basic TR pattern, notification signaling may be carried in at least one of broadcast information, such as a system information block (system information block, SIB) 1, other system information (other system information, OSI), and a master system information block (master information block, MIB). The signaling may be sent by the network device to the terminal device in a broadcast or multicast manner. The method can be used to avoid sending signaling separately when different resources are scheduled for different UE, and reduce signaling overheads of resource scheduling and system scheduling complexity.

In an optional implementation, when the signaling is sent in a radio resource control (radio resource control, RRC) connection setup phase and a subsequent communication process, the network device may include the signaling in at least one of RRC signaling (for example, an RRC setup (RRC setup) message, RRC reconfiguration (RRC Reconfiguration) signaling, RRC resume (RRC Resume) signaling), downlink control information (downlink control information, DCI), group DCI, and a media access control (media access control, MAC) control element (control element, CE), or indicate the signaling/parameter values to the UE in a table manner, or perform sending to the UE in a unicast or multicast manner along with data transmission or in a separately allocated PDSCH bearer. In this method, parameter values of single UE may be flexibly controlled, and different parameter values are configured for the UE based on different link budgets in different locations or different regions of the UE, to optimize system transmit power efficiency and optimize UE communication performance or system communication performance. For example, different TR patterns may be configured and used (for example, different offset values and different quantities of offset values are configured) based on different geographical locations of the UE, different required link budgets, and different requirements for transmit signal power, to optimize PAPR suppression performance of each UE/each group of UE, avoid excessive waste of spectrum resources, and improve overall communication performance of the UE and the system.

When the offset values and the first PR pattern are agreed on by using the protocol, this embodiment of this application provides the following detailed descriptions.

The following describes manners of agreeing on the offset values.

In a possible implementation, in this embodiment of this application, offset values corresponding to different bandwidths may be agreed on, so that the transmitting end or the receiving end determines the offset values based on the bandwidth to generate a new PR pattern.

For example, downlink transmission is used as an example, and offset values used are agreed on based on a carrier bandwidth. For example, when a carrier bandwidth is 100 M, a basic TR pattern (TR pattern 1) is used; when a carrier bandwidth is 200 M, an offset value $K_1=792$ and a basic TR pattern are used to generate a new TR pattern 2, and the new TR pattern 2 is used; or when a carrier bandwidth is 400 M, offset values $K_1=792$, $K_2=1584$, $K_3=2376$ and a basic TR pattern are used to generate a new TR pattern 3, and the new TR pattern 3 is used. For a manner of generating the TR pattern, refer to the method in FIG. 8.

The foregoing offset values are used as examples. Table 7 shows mapping relationships between the offset values and the carrier bandwidths. Values of $K_1$ in the TR pattern 2 and the TR pattern 3 may be the same or different, that is, offset values such as $K_1$ and $K_2$ in different TR patterns are not limited to being the same. For example, $K_1=792$ corresponding to the TR pattern 2, and $K_1=812$ corresponding to the TR pattern 3.

**Table 7**

| Bandwidth (MHz) SCS=120 kHz | TR pattern | Offset value | TR pattern length |
|---|---|---|---|
| 100 | TR pattern 1 | | 24 |
| 200 | TR pattern 2 | $K_1=792$ | 48 |
| 400 | TR pattern 3 | $K_1=792$ $K_2=1584$ $K_3=2376$ | 96 |

**Table 8**

| Bandwidth (MHz) SCS=120 kHz | TR pattern | Offset value | TR pattern length |
|---|---|---|---|
| 100 | TR pattern 1 | $K_1=Y$ | 24 |
| 200 | TR pattern 2 | $K_1=792+Y$ | 48 |
| 400 | TR pattern 3 | $K_1=800+Y$ $K_2=1600+Y$ $K_3=2400+Y$ | 96 |

Table 8 is used as an example. The TR pattern 1 may be translated for use. For example, the offset value is Y, and Y is an integer. In this case, for the 100 M bandwidth, a used TR pattern includes only a TR pattern obtained after the TR pattern 1 is translated based on the offset value Y. Values of Y corresponding to the TR pattern 1, the TR pattern 2, and the TR pattern 3 may be the same or different. In the following embodiment, the offset value Y may also be increased.

It may be understood that, as shown in Table 7, the bandwidth (a second bandwidth $BW2$) corresponding to the TR pattern 1 (an example of a first reserved tone pattern) is 100 MHz, the bandwidth (a first bandwidth $BW1$) corresponding to the TR pattern 2 (an example of a second reserved tone pattern) is 200 MHz, and the bandwidth (the first bandwidth $BW1$) corresponding to the TR pattern 3 (an example of a second reserved tone pattern) is 400 MHz. The TR pattern 2 includes $X$ translated TR patterns 1, where $x = \mathrm{int}(BW1 / BW2)$, that is, the TR pattern 2 includes two TR patterns 1. The TR pattern 3 includes four translated TR patterns 1. For the TR pattern 1, $X$ is equal to 1, that is, the TR pattern 1 includes one TR pattern 1.

In another possible implementation, in this embodiment of this application, offset values corresponding to IFFT lengths may be agreed on, so that the transmitting end or the receiving end determines the offset values based on the bandwidth to generate a new PR pattern.

For example, downlink transmission is used as an example, and offset values used are agreed on based on an IFFT length. For example, when a used IFFT length is 1024, a basic TR pattern (TR pattern 1) is used; when a used IFFT length is 2048, an offset value $K_1=792$ and a basic TR pattern are used to generate a new TR pattern 2, and the new TR pattern 2 is used; or when a used IFFT length is 4096, offset values $K_1=792$, $K_2=1584$, $K_3=2376$ and a basic TR pattern are used to generate a new TR pattern 3, and the new TR pattern 3 is used. For a manner of generating the TR pattern, refer to the method in FIG. 8.

The foregoing offset values are used as examples. Table 9 shows mapping relationships between the offset values and the IFFT lengths. Values of $K_1$ in the TR pattern 2 and the TR pattern 3 may be the same or different, that is, offset values such as $K_1$ and $K_2$ in different TR patterns are not limited to being the same.

**Table 9**

| IFFT length | TR pattern | Offset value | TR pattern length |
|---|---|---|---|
| 1024 | TR pattern 1 |  | 24 |
| 2048 | TR pattern 2 | $K_1=792$ | 48 |
| 4096 | TR pattern 3 | $K_1=792$ $K_2=1584$ $K_3=2376$ | 96 |

**Table 10**

| IFFT length | TR pattern | Offset value | TR pattern length |
|---|---|---|---|
| 1024 | TR pattern 1 | $K_1=Y$ | 24 |
| 2048 | TR pattern 2 | $K_1=792+Y$ | 48 |
| 4096 | TR pattern 3 | $K_1=792+Y$ $K_2=1584+Y$ $K_3=2376+Y$ | 96 |

It may be understood that the TR pattern 1 in Table 10 may be translated for use. For example, the offset value is Y, and Y is an integer. In this case, when the IFFT length is 1024, a used TR pattern includes only a TR pattern obtained after the TR pattern 1 is offset. Values of Y corresponding to the TR pattern 1, the TR pattern 2, and the TR pattern 3 may be the same or different.

In still another possible implementation, in this embodiment of this application, offset values corresponding to a quantity of RBs corresponding to a bandwidth or a quantity of RBs of a used frequency domain resource may be agreed on, so that the transmitting end or the receiving end determines the offset values based on the bandwidth or the quantity of RBs to generate a new PR pattern.

For example, downlink transmission is used as an example, and offset values used are agreed on based on a quantity of RBs corresponding to a bandwidth. For example, when a quantity of RBs=66, a basic TR pattern (TR pattern 1) is used; when a quantity of RBs=132, an offset value $K_1=792$ and a basic TR pattern are used to generate a new TR pattern 2, and the new TR pattern 2 is used; or when a quantity of RBs=264, offset values $K_1=792$, $K_2=1584$, $K_3=2376$ and a basic TR pattern are used to generate a new TR pattern 3, and the new TR pattern 3 is used. For a manner of generating the TR pattern, refer to the method in FIG. 8.

The foregoing offset values are used as examples. Table 11 shows mapping relationships between the offset values and the quantity of RBs corresponding to the bandwidths. Values of $K_1$ in the TR pattern 2 and the TR pattern 3 may be the same or different, that is, offset values such as $K_1$ and $K_2$ in different TR patterns are not limited to being the same.

## EP 4 518 267 A1

**Table 11**

| RB num | TR pattern | Offset value | TR pattern length |
|---|---|---|---|
| 66 | TR pattern 1 | | 24 |
| 132 | TR pattern 2 | $K_1$=792 | 48 |
| 264 | TR pattern 3 | $K_1$=792<br>$K_2$=1584<br>$K_3$=2376 | 96 |

**Table 12**

| RB num | TR pattern | Offset value | TR pattern length |
|---|---|---|---|
| 66 | TR pattern 1 | $K_1$=Y | 24 |
| 132 | TR pattern 2 | $K_1$=792+Y | 48 |
| 264 | TR pattern 3 | $K_1$=792+Y<br>$K_2$=1584+Y<br>$K_3$=2376+Y | 96 |

It may be understood that the TR pattern 1 in Table 12 may be translated for use. For example, the offset value is Y, and Y is an integer. In this case, when the quantity of RBs is 66, a used TR pattern includes only a TR pattern obtained after the TR pattern 1 is offset. Values of Y corresponding to the TR pattern 1, the TR pattern 2, and the TR pattern 3 may be the same or different.

It may be understood that the foregoing Table 7 to Table 12 list the mapping relationships between the offset values of the TR patterns generated by using the method 800 and the bandwidths, the quantities of RBs corresponding to the bandwidths, or the IFFT lengths.

For the TR pattern generation manner shown in FIG. 11, a system bandwidth or a quantity of RBs corresponding to the bandwidth and offset values may also be mapped.

By way of example, and not limitation, the following Table 13 shows mapping relationships between carrier bandwidths and offset values. The offset values corresponding to the different bandwidths may be agreed on by using a protocol, and a new TR pattern to be used is determined based on a basic TR pattern and the offset value. Values of $K_1$ in the TR pattern 2 and the TR pattern 3 may be the same or different, that is, offset values such as $K_1$ and $K_2$ in different TR patterns are not limited to being the same.

**Table 13**

| Bandwidth (MHz) | TR pattern | Offset value | TR pattern length |
|---|---|---|---|
| 50 | TR pattern 1 | | 12 |
| 100 | TR pattern 2 | $K_1$=384 | 24 |
| 200 | TR pattern 3 | $K_1$=384<br>$K_2$=792 | 48 |
| 400 | TR pattern 4 | $K_1$=384<br>$K_2$=792<br>$K_3$=1584 | 96 |

It may be understood that the TR pattern 1 in Table 13 may be translated for use. For example, the offset value is Y, and Y is an integer. In this case, for the 50 M bandwidth, a used TR pattern includes only a TR pattern obtained after the TR pattern 1 is offset. Values of Y corresponding to the TR pattern 1, the TR pattern 2, the TR pattern 3, and the TR pattern 4 may be the same or different.

By way of example, and not limitation, the following Table 14 shows mapping relationships between quantities of RBs and offset values. The offset values corresponding to the different quantities of RBs may be agreed on by using a protocol, and a new TR pattern to be used is determined based on a basic TR pattern and the offset value. Values of $K_1$ in the TR pattern 2 and the TR pattern 3 may be the same or different, that is, offset values such as $K_1$ and $K_2$ in different TR patterns are not limited to being the same.

**Table 14**

| RB num | TR pattern | Offset value | TR pattern length |
|--------|-----------|--------------|-------------------|
| 32 | TR pattern 1 | | 12 |
| 66 | TR pattern 2 | $K_1=384$ | 24 |
| 132 | TR pattern 3 | $K_1=384$ $K_2=792$ | 48 |
| 264 | TR pattern 4 | $K_1=384$ $K_2=792$ $K_3=1584$ | 96 |

It may be understood that the TR pattern 1 in Table 14 may be translated for use. For example, the offset value is Y, and Y is an integer. In this case, when the quantity of RBs is 32, a used TR pattern includes only a TR pattern obtained after the TR pattern 1 is offset. Values of Y corresponding to the TR pattern 1, the TR pattern 2, the TR pattern 3, and the TR pattern 4 may be the same or different.

In still another possible implementation, in this embodiment of this application, a calculation relationship between offset values and a system bandwidth (or a quantity of RBs corresponding to the bandwidth) may be agreed on.

For example, it is agreed and determined that a quantity of offset values is equal to a product of 12 and the quantity of RBs corresponding to the bandwidth.

For example, if a quantity of RBs corresponding to a system bandwidth=50, a quantity of offsets=50*12=600.

For another example, a basic TR pattern is applicable to a quantity of RBs=65 (50 MHz bandwidth). When the basic TR pattern is extended to be applicable to a quantity of RBs=135 (100 MHz), it may be agreed that a quantity of offset values 65*12=780 is determined based on the quantity of RBs=65 corresponding to the bandwidth to which the basic TR pattern is applicable, that is, the quantity of offset values=the quantity of RBs corresponding to the bandwidth*12, and then a TR pattern applicable to a quantity of RBs=135 is generated based on the offset values and the basic TR pattern.

For another example, a basic TR pattern is applicable to a quantity of RBs=65 (50 MHz bandwidth). When the basic TR pattern is extended to be applicable to a quantity of RBs=135 (100 MHz), it may be agreed that a quantity of offset values 135*12/2=810 is determined based on the quantity of RBs=135 corresponding to a bandwidth to be converted, that is, the quantity of offset values=the quantity of bandwidth RBs*12/2, and then a TR pattern applicable to the quantity of RBs=135 is generated based on the offset values and the basic TR pattern.

The offset values are agreed on in the foregoing manners, that is, the offset values are mapped to the system bandwidth, the quantity of RBs corresponding to the bandwidth, or the IFFT length. This avoids transmitting offset value information, and reduces signaling overheads.

The following describes manners of determining the first TR pattern.

In a possible implementation, in this embodiment of this application, composition of reserved sub-carriers in the basic TR pattern may be changed based on the actual carrier bandwidth or through an indication, so that the transmitting end or the receiving end generates a new PR pattern based on the offset values.

For example, some tones may be selected as the basic TR pattern (the first TR pattern) based on the actual carrier bandwidth.

Specifically, index numbers of reserved tones included in an initial TR pattern may be understood as sub-carrier index numbers in the carrier bandwidth. The network device and the UE determine the quantity of occupied sub-carriers Num_subcarrier (for example, the quantity of sub-carriers=the quantity of RBsx12) based on the used carrier bandwidth (carrier bandwidth), or the quantity of RBs corresponding to the bandwidth. When the sub-carrier index number in the carrier bandwidth starts from 0, reserved tone index numbers not greater than (Num_subcarrier-1) are selected from the reserved tone index numbers in the initial TR pattern to form the basic TR pattern to be used by the network device and the UE. Alternatively, when the sub-carrier index number in the carrier bandwidth starts from 1, reserved tone index numbers not greater than Num_subcarrier are selected from the reserved tone index numbers in the initial TR pattern to form the basic TR pattern to be used by the network device and the UE.

For example, a TR pattern listed in the following Table 15 is used as the initial TR pattern. The network device and the terminal device may agree on a list of the initial TR pattern by using a protocol, or the network device sends a list of the initial TR pattern to the terminal device.

**Table 15**

| 1 | 2 | 3 | 4 | 5 | 6 | 7 | 8 | 9 | 10 |
|---|---|---|---|---|---|---|---|---|----|
| 253 | 101 | 376 | 344 | 93 | 375 | 12 | 67 | 282 | 154 |

(continued)

| 11 | 12 | 13 | 14 | 15 | 16 | 17 | 18 | 19 | 20 |
|---|---|---|---|---|---|---|---|---|---|
| 246 | 78 | 750 | 668 | 778 | 769 | 791 | 622 | 706 | 573 |
| 21 | 22 | 23 | 24 | | | | | | |
| 396 | 690 | 473 | 775 | | | | | | |

The network device and the terminal device use reserved tone index numbers in a system bandwidth as the basic TR pattern (the first TR pattern). For example, if the system bandwidth is 50 MHz, a quantity of RBs is equal to 32. The bandwidth is extended to a TR pattern used by a 100 MHz bandwidth (a quantity of RBs is equal to 66). First, a quantity of RBs is determined and a quantity of occupied sub-carriers (Num_subcarrier=32×12=384) is determined. If the reserved tone index number added in Table 11 starts from 0, the UE obtains, based on reserved tones index≤Num_subcarrier-1, a combination of the reserved tones in the basic TR pattern to be used, that is, reserved tones index≤383 is met. Alternatively, if the reserved tone index number starts from 1, the UE obtains, based on reserved tones index≤Num_sub-carrier, a combination of the reserved tone index numbers in the basic TR pattern to be used, that is, reserved tones index≤384 is met.

A list of the basic TR patterns corresponding to the initial TR pattern in Table 15 may be obtained by using the foregoing method, as shown in the following Table 16.

**Table 16**

| 1 | 2 | 3 | 4 | 5 | 6 | 7 | 8 | 9 | 10 |
|---|---|---|---|---|---|---|---|---|---|
| 253 | 101 | 376 | 344 | 93 | 375 | 12 | 67 | 282 | 154 |
| 11 | 12 | | | | | | | | |
| 246 | 78 | | | | | | | | |

For example, the network device may indicate the UE to select some reserved tones in the initial TR pattern as the basic TR pattern.

For example, a base station indicates, based on a requirement on PAPR suppression, the UE to select some reserved tones in the initial TR pattern as the basic TR pattern. Specifically, the base station may determine, based on power amplifier performance, that a 3 dB PAPR needs to be suppressed, reserve 20 sub-carriers to implement the suppression performance, and indicate the UE to use the reserved tones whose length is 20 (20 reserved tones) in the initial TR pattern as the basic TR pattern.

A basic TR pattern is generated based on an example of the initial TR pattern in Table 15 and the length (for example, the indication length 20) indicated by the network device, as shown in Table 17.

**Table 17**

| 1 | 2 | 3 | 4 | 5 | 6 | 7 | 8 | 9 | 10 |
|---|---|---|---|---|---|---|---|---|---|
| 253 | 101 | 376 | 344 | 93 | 375 | 12 | 67 | 282 | 154 |
| 11 | 12 | 13 | 14 | 15 | 16 | 17 | 18 | 19 | 20 |
| 246 | 78 | 750 | 668 | 778 | 769 | 791 | 622 | 706 | 573 |

For example, a plurality of initial TR patterns may be preconfigured on the network device and the terminal device, and the network device indicates, to the terminal device, which initial TR pattern is specifically used as the basic TR pattern.

The first TR pattern is determined in the foregoing manner, that is, the reserved tones applicable to a bandwidth is selected from the initial pattern based on the actual carrier bandwidth or the indication of the network device as the first TR pattern. This avoids transmitting basic TR pattern information, and reduces signaling overheads.

Optionally, in another possible implementation of this application, the first communication apparatus and the second communication apparatus each store a plurality of TR patterns applicable to different bandwidths, different quantities of RBs, or different IFFT lengths. These TR patterns may include the basic TR pattern and new TR patterns obtained after copying and translation. In other words, these TR patterns meet copying and translation characteristics between the TR patterns in the foregoing embodiments. For example, the first communication apparatus and the second communication apparatus each store all or some reserved tone patterns in the TR pattern 1, the TR pattern 2, and the TR pattern 3 in Table 7, that is, store all or some reserved sub-carrier sets corresponding to the three reserved tone patterns: the TR pattern 1, the TR pattern 2, and the TR pattern 3. In addition, the three TR patterns meet extended characteristics or the copying and translation characteristic between the TR pattern 1, the TR pattern 2, and the TR pattern 3 shown in Table 7. Similarly, the first device and the second device may select, based on different bandwidths, different quantities of RBs, or different IFFT lengths, and correspondences to the lengths of the TR patterns (or the TR patterns) shown in Table 7, Table 8, Table 9, Table 10, Table 11, or Table 12, to use the TR pattern 1, the TR pattern 2, or the TR pattern 3.

It should be understood that the steps in the foregoing embodiments are merely possible implementations, and this is not limited in embodiments of this application.

The foregoing mainly describes the solutions provided in embodiments of this application from perspectives of interactions. It may be understood that, to implement the foregoing functions, each network element, such as a transmitting end device or a receiving end device, includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the transmitting end device or the receiving end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example, and is merely a logical function division. In actual implementation, another division manner may be used. Descriptions are provided below by using an example in which each functional module is obtained through division corresponding to each function.

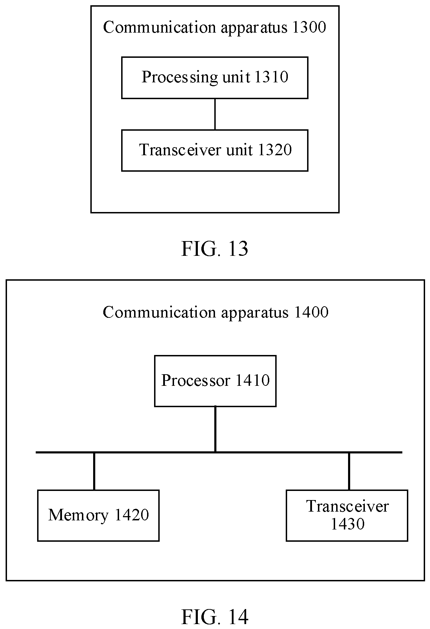

The methods provided in embodiments of this application are described in detail above with reference to FIG. 7 to FIG. 12. Apparatuses provided in embodiments of this application are described in detail below with reference to FIG. 13 and FIG. 14. It should be understood that descriptions of apparatus embodiments correspond to descriptions of method embodiment. Therefore, for content that is not described in detail, refer to the method embodiment. For brevity, details are not described herein again.

FIG. 13 is a block diagram of a communication apparatus according to this application. As shown in FIG. 13, the communication apparatus 1300 includes a processing unit 1310 and a transceiver unit 1320.

The processing unit 1310 is configured to determine a first bandwidth $BW1$.

The processing unit 1310 is further configured to determine a second reserved tone pattern based on the first bandwidth $BW1$ and a first reserved tone pattern, where the second reserved tone pattern is a tone index set corresponding to second reserved tones, the first reserved tone pattern is a tone index set corresponding to first reserved tones, the second reserved tone pattern includes $x$ translated first reserved tone patterns, a bandwidth corresponding to the first reserved tone pattern is a second bandwidth $BW2$, $x = int(BW1 / BW2)$, and int represents rounding.

The transceiver unit 1320 is configured to receive or send data based on the second reserved tone pattern.

Optionally, when the communication apparatus is a terminal communication apparatus, the transceiver unit 1320 is further configured to receive $X$ offset values.

Optionally, when the communication apparatus is a network communication apparatus, the transceiver unit 1320 is further configured to send $X$ offset values.

Optionally, the $X$ offset values are an integer multiple of a reciprocal of reference signal density of the first bandwidth $BW1$.

Optionally, the processing unit 1310 is further configured to determine the $X$ offset values based on the first bandwidth $BW1$.

Optionally, the processing unit 1310 is specifically configured to determine the $X$ offset values based on a quantity of RBs corresponding to the first bandwidth $BW1$.

Optionally, the processing unit 1310 is further configured to determine the $X$ offset values based on an IFFT length.

Optionally, int represents rounding up or rounding down.

In an embodiment, the transceiver unit 1320 is configured to receive $X$ offset values; the processing unit 1310 is configured to determine a second reserved tone pattern based on the $X$ offset values and a first reserved tone pattern, where the second reserved tone pattern is a tone index set corresponding to second reserved tones, the second reserved tone pattern includes $X$ translated first reserved tone patterns, and $X$ is a positive integer; and the transceiver unit 1320 is further configured to receive or send data based on the second reserved tone pattern.

Optionally, when the communication apparatus is a terminal communication apparatus, the transceiver unit 1320 is further configured to receive the first reserved tone pattern.

Optionally, when the communication apparatus is a network communication apparatus, the transceiver unit 1320 is further configured to send the first reserved tone pattern.

Optionally, in an example, the communication apparatus 1300 may be a transmitting end in the method embodiment. In this case, the transceiver unit 1320 may include a receiver and a transmitter. The receiver and the transmitter may alternatively be integrated into a transceiver.

Optionally, in another example, the communication apparatus 1300 may be a chip or an integrated circuit installed in the transmitting end. In this case, the transceiver unit 1320 may be a communication interface or an interface circuit. For example, the transceiver unit 1320 may include an input interface or an input circuit, and an output interface or an output circuit.

In each example, the processing unit 1310 is configured to perform processing and/or operations implemented inside the transmitting end in addition to sending and receiving actions.

Optionally, the processing unit 1310 may be a processing apparatus. A function of the processing apparatus may be implemented by hardware, or may be implemented by hardware executing corresponding software. For example, the processing apparatus may include at least one processor and at least one memory, the at least one memory is configured to store a computer program, and the at least one processor reads and executes the computer program stored in the at least one memory, so that the communication apparatus 1300 performs the operations and/or processing performed by the transmitting end in the various method embodiments.

Optionally, the processing apparatus may include only a processor, and the memory configured to store the computer program is located outside the processing apparatus. The processor is connected to the memory through a circuit/wire, to read and execute the computer program stored in the memory.

In some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that operations and/or processing performed by the transmitting end in the various method embodiments are/is performed.

Optionally, in an example, the communication apparatus 1300 may be a receiving end in the method embodiment. In this case, the transceiver unit 1320 may include a receiver and a transmitter. The receiver and the transmitter may alternatively be integrated into a transceiver.

Optionally, in another example, the communication apparatus 1300 may be a chip or an integrated circuit installed in the transmitting end. In this case, the transceiver unit 1320 may be a communication interface or an interface circuit. For example, the transceiver unit 1320 may include an input interface or an input circuit, and an output interface or an output circuit.

In each example, the processing unit 1310 is configured to perform processing and/or operations implemented inside the transmitting end in addition to sending and receiving actions.

Optionally, the processing unit 1310 may be a processing apparatus. A function of the processing apparatus may be implemented by hardware, or may be implemented by hardware executing corresponding software. For example, the processing apparatus may include at least one processor and at least one memory, the at least one memory is configured to store a computer program, and the at least one processor reads and executes the computer program stored in the at least one memory, so that the communication apparatus 1300 performs the operations and/or processing performed by the transmitting end in the various method embodiments.

Optionally, the processing apparatus may include only a processor, and the memory configured to store the computer program is located outside the processing apparatus. The processor is connected to the memory through a circuit/wire, to read and execute the computer program stored in the memory.

In some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that operations and/or processing performed by the transmitting end in the various method embodiments are/is performed.

FIG. 14 is a block diagram of a structure of a communication apparatus 1400 according to an embodiment of this application. As shown in FIG. 14, the communication apparatus 1400 includes a processor 1410, a memory 1420, and a transceiver 1430. The processor 1410 is coupled to the memory 1420, and is configured to execute instructions stored in the memory 1420, to control the transceiver 1430 to send a signal and/or receive a signal.

It should be understood that the processor 1410 and the memory 1420 may be integrated into one processing apparatus. The processor 1410 is configured to execute program code stored in the memory 1420 to implement the foregoing functions. During specific implementation, the memory 1420 may also be integrated into the processor 1410, or may be independent of the processor 1410. It should be understood that the processor 1410 may also correspond to each processing unit in the foregoing communication apparatus, and the transceiver 1430 may correspond to each receiving unit and each sending unit in the foregoing communication apparatus.

It should be understood that the transceiver 1430 may include a receiver (or referred to as a receiver machine) and a transmitter (or referred to as a transmitter machine). The transceiver may further include one or more antennas. The transceiver may further be a communication interface or an interface circuit.

Specifically, the communication apparatus 1400 may correspond to the network device and the terminal device in the method 700, the method 800, the method 900, and the method 1100 according to embodiments of this application. The communication apparatus 1400 may include units of the methods performed by the network device in the method 700, the method 800, the method 900, and the method 1100, or units of the methods performed by the terminal device in the method 700, the method 800, the method 900, and the method 1100. It should be understood that a specific process in which the units perform the foregoing corresponding steps is described in detail in the foregoing method embodiments, and for brevity, details are not described herein.

When the communication apparatus 1400 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiment can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the word "example" or "for example" is used to represent giving an example, an illustration, or a description. Any embodiment or design scheme described as an "example" in this application should not be explained as being more preferred or having more advantages than another embodiment or design scheme.

Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" means two or more.

It should be understood that in embodiments of this application, "B corresponding to A" indicates that B is associated with A, and B may be determined based on A. However, it should be understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    determining a first bandwidth $BW1$;
    determining a second reserved tone pattern based on the first bandwidth $BW1$ and a first reserved tone pattern, wherein the second reserved tone pattern is a tone index set corresponding to second reserved tones, the first reserved tone pattern is a tone index set corresponding to first reserved tones, the second reserved tone pattern comprises $X$ translated first reserved tone patterns, a bandwidth corresponding to the first reserved tone pattern is a second bandwidth $BW2$, $x = \text{int}(BW1 / BW2)$, and int represents rounding; and
    receiving or sending data based on the second reserved tone pattern.

2.  The method according to claim 1, wherein when the method is applied to a first communication apparatus, the method further comprises: receiving $X$ offset values.

3.  The method according to claim 1, wherein when the method is applied to a second communication apparatus, the method further comprises: sending $X$ offset values.

4.  The method according to any one of claims 1 to 3, wherein the $x$ offset values are an integer multiple of a reciprocal of reference signal density of the first bandwidth $BW1$.

5.  The method according to any one of claims 1 to 4, wherein the method further comprises:
    determining the $X$ offset values based on the first bandwidth $BW1$.

6.  The method according to claim 5, wherein the determining the $X$ offset values based on the first bandwidth $BW1$ comprises:
    determining the $X$ offset values based on a quantity of RBs corresponding to the first bandwidth $BW1$.

7.  The method according to any one of claims 1 to 4, wherein the method further comprises:
    determining the $X$ offset values based on an IFFT length.

8.  The method according to any one of claims 1 to 7, wherein int represents rounding up or rounding down.

9.  The method according to any one of claims 1 to 8, wherein the method further comprises:
    determining the first reserved tone pattern based on the second bandwidth $BW2$ or a quantity of RBs occupied by the second bandwidth $BW2$.

10. A communication method, wherein when the method is applied to a first communication apparatus, the method comprises:

receiving $X$ offset values;
determining a second reserved tone pattern based on the $X$ offset values and a first reserved tone pattern, wherein the second reserved tone pattern is a tone index set corresponding to second reserved tones, the second reserved tone pattern comprises $X$ translated first reserved tone patterns, and $X$ is a positive integer; and receiving or sending data based on the second reserved tone pattern.

11. The method according to claim 2 or 10, wherein the method further comprises:
receiving the first reserved tone pattern.

12. A communication method, wherein when the method is applied to a second communication apparatus, the method comprises:

sending $X$ offset values;
determining a second reserved tone pattern based on the $X$ offset values and a first reserved tone pattern, wherein the second reserved tone pattern is a tone index set corresponding to second reserved tones, the second reserved tone pattern comprises $X$ translated first reserved tone patterns, and $X$ is a positive integer; and receiving or sending data based on the second reserved tone pattern.

13. The method according to claim 3 or 12, wherein the method further comprises:
sending the first reserved tone pattern.

14. A communication apparatus, comprising:

a processing unit, configured to determine a first bandwidth $BW1$, wherein
the processing unit is further configured to determine a second reserved tone pattern based on the first bandwidth $BW1$ and a first reserved tone pattern, the second reserved tone pattern is a tone index set corresponding to second reserved tones, the first reserved tone pattern is a tone index set corresponding to first reserved tones, the second reserved tone pattern comprises $X$ translated first reserved tone patterns, a bandwidth corresponding to the first reserved tone pattern is a second bandwidth $BW2$, $x = int(BW1 / BW2)$, and int represents rounding; and
a transceiver unit, configured to receive or send data based on the second reserved tone pattern.

15. The apparatus according to claim 14, wherein when the communication apparatus is a first communication apparatus, the transceiver unit is further configured to receive $X$ offset values.

16. The apparatus according to claim 14, wherein when the communication apparatus is a second communication apparatus, the transceiver unit is further configured to send $X$ offset values.

17. The apparatus according to any one of claims 14 to 16, wherein the $X$ offset values are an integer multiple of a reciprocal of reference signal density of the first bandwidth $BW1$.

18. The apparatus according to any one of claims 14 to 17, wherein the processing unit is further configured to:
determine the $X$ offset values based on the first bandwidth $BW1$.

19. The apparatus according to claim 18, wherein the processing unit is specifically configured to:
determine the $X$ offset values based on a quantity of RBs corresponding to the first bandwidth $BW1$.

20. The apparatus according to any one of claims 14 to 17, wherein the processing unit is further configured to:
determine the $X$ offset values based on an IFFT length.

21. The apparatus according to any one of claims 14 to 20, wherein int represents rounding up or rounding down.

22. The apparatus according to any one of claims 14 to 21, wherein the processing unit is further configured to:
determine the first reserved tone pattern based on the second bandwidth $BW2$ or a quantity of RBs occupied by the second bandwidth $BW2$.

23. A communication apparatus, wherein when the communication apparatus is a first communication apparatus, the apparatus comprises:

  a transceiver unit, configured to receive $X$ offset values; and
  a processing unit, configured to determine a second reserved tone pattern based on the $X$ offset values and a first reserved tone pattern, wherein the second reserved tone pattern is a tone index set corresponding to second reserved tones, the second reserved tone pattern comprises $X$ translated first reserved tone patterns, and $X$ is a positive integer; and
  the transceiver unit is further configured to receive or send data based on the second reserved tone pattern.

24. The apparatus according to claim 15 or 23, wherein the transceiver unit is further configured to:
  receive the first reserved tone pattern.

25. A communication apparatus, wherein when the communication apparatus is a second communication apparatus, the apparatus comprises:

  a transceiver unit, configured to send $X$ offset values; and
  a processing unit, configured to determine a second reserved tone pattern based on the $X$ offset values and a first reserved tone pattern, wherein the second reserved tone pattern is a tone index set corresponding to second reserved tones, the second reserved tone pattern comprises $X$ translated first reserved tone patterns, and $X$ is a positive integer; and
  the transceiver unit is further configured to receive or send data based on the second reserved tone pattern.

26. The apparatus according to claim 16 or 25, wherein the transceiver unit is further configured to:
  send the first reserved tone pattern.

27. A chip, comprising a logic circuit and a communication interface, wherein the communication interface is configured to: receive to-be-processed data and/or information, and transmit the to-be-processed data and/or information to the logic circuit, the logic circuit is configured to perform processing of determining a second reserved tone pattern according to any one of claims 1 to 13, and the communication interface is further configured to receive or send data based on the second reserved tone pattern.

28. A communication apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 13.

29. The communication apparatus according to claim 28, wherein the at least one processor is integrated together with the at least one memory.

30. A computer-readable storage medium, wherein the computer-readable storage medium stores computer instructions, and when the computer instructions are run on a computer, the method according to any one of claims 1 to 13 is implemented.

31. A communication system, comprising a first communication apparatus and a second communication apparatus configured to perform the method according to any one of claims 1 to 13.

System 100

Network
device 110

Terminal
device 120

Terminal
device 130

FIG. 1

System 200

5G base
station

5G new radio

Terminal

NG interface

Xn
interface

5G new radio

Terminal

5G base
station

Terrestrial
station

5G user plane
processing unit
(UPF)

Data
network

5G access and
mobility
management
function (AMF)

5G session
management
function (SMF)

5G control plane

FIG. 2

System 300

Satellite device
310

Service
link 350

User
terminal 330

User terminal
340

Feeder
link 360

Gateway station/
Signal gateway
station 320

gNB

FIG. 3

System 400

Diameter: 100 km to 300 km

Height: 6 km
to 12 km

User terminal
(airplane)

Base station          Base station          Base station

FIG. 4

QAM signal → Reserve some tones → IDFT → PAPR suppression by using TR → Add a CP → Digital-to-analog conversion → HPA → Channel

QAM signal ← Skip the reserved tones ← Frequency domain equalization ← DFT ← Remove the CP ← Analog-to-digital conversion ← Channel

FIG. 5

Reserved tone / Data tone → IDFT → Peak value detection → Cyclic shift ← Kernel signal → Phase rotation, and transformation → (+ −) ⊕ → PAPR<iteration quantity threshold≥$N$ → Signal obtained after PAPR suppression

FIG. 6

Method 700

S710
Determine a first bandwidth

S720
Determine a second reserved tone pattern based on the first bandwidth and a first reserved tone pattern, where the second reserved tone pattern includes $x$ translated first reserved tone patterns

S730
Receive or send data based on the second reserved tone pattern

FIG. 7

TR pattern 1

TR pattern 2

↑ Reserved sub-carrier

TR pattern 3

$K_1$

$K_2$

$K_3$

Frequency

FIG. 8

TR pattern 2

↑ Reserved sub-carrier

TR pattern 1

$K_1$  Translate the TR pattern 1

Frequency

FIG. 9

FIG. 10

FIG. 11

FIG. 12

Communication apparatus 1300

Processing unit 1310

Transceiver unit 1320

FIG. 13

Communication apparatus 1400

Processor 1410

Memory 1420

Transceiver 1430

FIG. 14

## INTERNATIONAL SEARCH REPORT

| International application No. |
|---|
| **PCT/CN2023/089747** |

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI: 载波, 音调, 预留, 保留, 索引, 图样, 图案, 偏移, 平移, 位移, 移位, 左移, 右移, 加和, 带宽, 高峰均功率比, Tone Reservation, TR, reserved tones, pattern, offset, shift, bandwidth, BW, Peak-to-Average Power Ratio, PAPR

**C. DOCUMENTS CONSIDERED TO BE RELEVANT**

| Category* | Citation of document, with indication, where appropriate, of the relevant passages | Relevant to claim No. |
|---|---|---|
| X | CN 104519004 A (SHANGHAI ADVANCED RESEARCH INSTITUTE, CHINESE ACADEMY OF SCIENCES) 15 April 2015 (2015-04-15) description, paragraphs [0034]-[0090] | 10-13, 23-31 |
| A | CN 114258716 A (HUAWEI TECHNOLOGIES CO., LTD.) 29 March 2022 (2022-03-29) entire document | 1-31 |
| A | WO 2014177839 A1 (SONY CORPORATION) 06 November 2014 (2014-11-06) entire document | 1-31 |
| A | CN 101536446 A (TELEFONAKTIEBOLAGET LM ERICSSON CO., LTD.) 16 September 2009 (2009-09-16) entire document | 1-31 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2023** | **19 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/089747**

| Patent document cited in search report | | | Publication date (day/month/year) | Patent family member(s) | | | Publication date (day/month/year) |
|---|---|---|---|---|---|---|---|
| CN | 104519004 | A | 15 April 2015 | None | | | |
| CN | 114258716 | A | 29 March 2022 | US | 2022174677 | A1 | 02 June 2022 |
| | | | | EP | 4013149 | A1 | 15 June 2022 |
| | | | | WO | 2021031034 | A1 | 25 February 2021 |
| WO | 2014177839 | A1 | 06 November 2014 | TW | 201515413 | A | 16 April 2015 |
| | | | | GB | 2513630 | A | 05 November 2014 |
| CN | 101536446 | A | 16 September 2009 | EP | 2078399 | A2 | 15 July 2009 |
| | | | | US | 2010118836 | A1 | 13 May 2010 |
| | | | | WO | 2008054310 | A2 | 08 May 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210521711